# EUROPEAN PATENT APPLICATION

(11) **EP 4 835 920 A1**
(43) Date of publication of application: **04.11.2026**
(21) Application number: 24912492.6
(22) Date of filing: 16.12.2024
(51) Int. Cl.: H01B 13/00, H01B 1/06, H01B 1/10

(54) **METHOD AND APPARATUS FOR PRODUCING CRYSTALLINE SULFIDE SOLID ELECTROLYTE**

(30) Priority: 26.12.2023 JP 2023219672
(71) Applicant: Idemitsu Kosan Co.,Ltd., Tokyo 100-8321 (JP)
(72) Inventor: KAGOTA Yasuhito, Tokyo 100-8321 (JP); KASATANI Yuichi, Tokyo 100-8321 (JP); KATO Koji, Tokyo 100-8321 (JP); YOSHINAGA Kentaro, Tokyo 100-8321 (JP)
(74) Representative: Vossius & Partner Patentanwälte Rechtsanwälte mbB
(86) International application number: PCT/JP2024/044457
(87) International publication number: WO 2025/142603

(57) **Abstract**

Provided is a method for producing a crystalline sulfide solid electrolyte which is capable of more efficiently producing a sulfide solid electrolyte having high ionic conductivity, and which can be readily adapted for mass production, the method including: obtaining an amorphous sulfide solid electrolyte containing a lithium atom, a phosphorus atom, a sulfur atom, and a halogen atom; and heating the amorphous sulfide solid electrolyte in a heated gas stream. Also provided is an apparatus for producing a crystalline sulfide solid electrolyte.

## Description

### Technical Field

The present invention relates to a method and an apparatus for producing a crystalline sulfide solid electrolyte.

### Background Art

In recent years, with the rapid spread of information-related devices such as personal computers, video cameras, and mobile phones, and communication devices, etc., the development of batteries used as a power source for the devices has been regarded as important. Conventionally, an electrolytic solution containing a flammable organic solvent has been used in a battery used for such applications, but since the electrolytic solution is liquid and flammable, there is a concern about safety regarding leakage, ignition, and the like when used as a battery. In particular, in in-vehicle applications, higher capacity and higher output are required, and a concern about safety in a battery using a conventional electrolytic solution is increasing. Therefore, by making the battery all-solid, an all-solid-state battery in which the electrolytic solution is replaced with a solid electrolyte layer has been developed because a flammable organic solvent is not used in the battery, simplification of safety devices is achieved, and the production cost and productivity are excellent.

Methods for producing a solid electrolyte used for a solid electrolyte layer are broadly divided into a solid phase method and a liquid phase method, and the liquid phase method includes a homogeneous method in which a solid electrolyte material is completely dissolved in a solvent, and a heterogeneous method in which a solid electrolyte material is not completely dissolved and a solid electrolyte is produced through a suspension of a solid-liquid coexistence. In recent years, studies on mass production of solid electrolytes have been progressing, and the liquid phase method using a complexing agent has been attracting attention as a method that is easily adaptable to scale-up. For example, a method for producing a solid which contains mixing a complexing agent and a solid electrolyte raw material to prepare an electrolyte precursor (for example, see PTL 1) by using a specific compound having amino groups as the complexing agent, and a method for producing a solid electrolyte which contains drying a slurry containing a complexing agent and an electrolyte precursor by fluidized drying using media particles (see, for example, PTL 2), etc., are known.

### Citation List

### Patent Literature

PTL 1: WO 2020/105737 A
PTL 2: WO 2021/230189 A

### Summary of Invention

### Technical Problem

An object of the present invention is to provide a method and an apparatus for producing a crystalline sulfide solid electrolyte that can more efficiently produce a sulfide solid electrolyte having high ionic conductivity and that can easily be adapted for mass production.

### Solution to Problem

The method for producing a crystalline sulfide solid electrolyte according to the present invention is
a production method including
obtaining an amorphous sulfide solid electrolyte containing a lithium atom, a phosphorus atom, a sulfur atom, and a halogen atom; and
heating the amorphous sulfide solid electrolyte in a heated gas stream.

### Advantageous Effects of Invention

According to the present invention, it is possible to provide a method and an apparatus for producing a crystalline sulfide solid electrolyte that can more efficiently produce a sulfide solid electrolyte having high ionic conductivity and that can easily be adapted for mass production.

### Brief Description of Drawings

[Fig. 1] Fig. 1 is a flowchart of an apparatus including a pneumatic conveying dryer and a bag filter used in Example 1.
[Fig. 2] Fig. 2 is an X-ray diffraction spectrum of a heated powder and a heated mechanically treated material obtained in Examples 1 and 2.
[Fig. 3] Fig. 3 is an X-ray diffraction spectrum of a powder obtained in Comparative Example 1.
[Fig. 4] Fig. 4 is an X-ray diffraction spectrum of a powder obtained in Comparative Example 2.
[Fig. 5] Fig. 5 is a flowchart illustrating the production method of the present embodiment.
[Fig. 6] Fig. 6 is a flowchart illustrating the production method of another embodiment.

### Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the Examples can also be used as the numerical values of the upper limit and the lower limit. Further, the specifications considered to be preferable can be arbitrarily adopted. That is, one specification considered to be preferable can be adopted in combination with one or plurality of other specifications considered to be preferable. It can be said to be more desirable to combine the preferred ones with each other.

### (Findings Obtained by the Inventors to Reach the Present Invention)

As a result of intensive studies to solve the above-described problems, the inventors have found the following matters, and have completed the present invention.

In recent years, as studies on the practical application of all-solid-state batteries have been progressing, the mass production of sulfide solid electrolytes has become an urgent issue, and studies on improving production efficiency are underway. The inventors of the present invention have been focusing on developing a liquid phase method, which is relatively easy to scale up, and in particular a heterogeneous method that uses a complexing agent during the reaction of solid electrolyte raw materials. The production methods disclosed in PTLs 1 and 2 employ a heterogeneous method based on the reaction between solid electrolyte raw materials and a complexing agent, and in this respect, they can be considered well-suited for scale-up.

In the course of investigating ways to further enhance production efficiency, the inventors of the present invention focused on a crystallization step via heating, in order to obtain a crystalline solid electrolyte. In conventional production methods such as those described in PTLs 1 and 2, a batch type heating device such as an agitated dryer has been employed for crystallization via heating due to its operational simplicity. However, it has become apparent that such batch type heating device presents significant concerns when scaling up for mass production. More specifically, it has been found that it is extremely difficult to increase the batch type heating device to match the processing scale for the thermal history applied to the powder, which is essential for crystallization. Consequently, this leads to defective crystallization of the solid electrolyte, making it extremely difficult to stably produce high-quality solid electrolytes having both homogeneity and high ionic conductivity.

Upon further investigation into heating methods for crystallization, the inventors of the present invention discovered that employing heating via a heated gas stream is effective. Heating via a heated gas stream allows for a drastic reduction in heating time while simultaneously ensuring a uniform thermal history across the entire powder. As a result, it becomes possible to suppress deterioration, such as oxidation, caused by excessive thermal history, and to stably produce high-quality solid electrolytes having both homogeneity and high ionic conductivity. Furthermore, regarding heating time, whereas conventional batch type required several hours, heating via a heated gas stream requires only a few seconds to a few minutes; consequently, it becomes possible to enhance the production efficiency of solid electrolytes. Moreover, regardless of the quantity of the object to be heated, it is easy to ensure a uniform thermal history, making it extremely simple for scale-up.

Based on the above findings, the inventors of the present invention have succeeded in establishing a production method and a production apparatus that enable the more efficient production of sulfide solid electrolytes having high ionic conductivity, and that can also be readily adapted for mass production.

### (Regarding Various Embodiments of the Present Embodiment)

The method for producing a crystalline sulfide solid electrolyte according to a first aspect of the present embodiment is
a method for producing a crystalline sulfide solid electrolyte, including
obtaining an amorphous sulfide solid electrolyte containing a lithium atom, a phosphorus atom, a sulfur atom, and a halogen atom; and
heating the amorphous sulfide solid electrolyte in a heated gas stream.

The method of obtaining an amorphous sulfide solid electrolyte in the method for producing a crystalline sulfide solid electrolyte according to the present embodiment is not particularly restricted as long as an amorphous sulfide solid electrolyte containing a lithium atom, a phosphorus atom, a sulfur atom, and a halogen atom can be obtained. That is, in the method for producing a crystalline sulfide solid electrolyte according to the present embodiment, heating the amorphous sulfide solid electrolyte in a heated gas stream is of particular importance. By heating the amorphous sulfide solid electrolyte in a heated gas stream, a crystalline sulfide solid electrolyte is obtained. In other words, heating the amorphous sulfide solid electrolyte in a heated gas stream corresponds to the heating intended for the crystallization of the amorphous sulfide solid electrolyte.

By employing heating in a heated gas stream for the crystallization of the amorphous sulfide solid electrolyte, as previously described, it becomes possible to drastically reduce the heating time while simultaneously ensuring a uniform thermal history across the entire powder. As a result, it becomes possible to suppress deterioration, such as oxidation, caused by excessive thermal history. Furthermore, conducting the heating in a heated gas stream not only enables crystallization to occur in an extremely short period but also easily ensures a uniform thermal history regardless of the quantity of the object to be heated, making it extremely simple for scale-up.

As a result, the production method of the present embodiment enables the more efficient production of sulfide solid electrolytes having both homogeneity and high ionic conductivity, and becomes a production method that can be readily adapted for mass production.

The method for producing a crystalline sulfide solid electrolyte according to a second aspect of the present embodiment is a method in which, in the first aspect,
a temperature of the heated gas stream is 150°C or higher and 250°C or lower.

Crystallization can be carried out more efficiently by setting the temperature of the heated gas stream at 150°C or higher and 250°C or lower during the crystallization of the amorphous sulfide solid electrolyte. Therefore, a crystalline sulfide solid electrolyte having higher homogeneity and high ionic conductivity can be easily obtained.

The method for producing a crystalline sulfide solid electrolyte according to a third aspect of the present embodiment is a method including, in the first or second aspect,
transferring a heated powder obtained by the heating from a heating device used in the heating in the heated gas stream to a separation apparatus through a transfer pipe; and
collecting the transferred heated powder using the separation apparatus;
in which the transfer pipe is heated.

By heating the transfer pipe through which the heated powder obtained by the aforementioned heating passes when being supplied to the separation apparatus, the crystallinity of the heated powder can be enhanced. As a result, a crystalline sulfide solid electrolyte having higher homogeneity and high ionic conductivity can be easily obtained.

The method for producing a crystalline sulfide solid electrolyte according to a fourth aspect of the present embodiment is a method in which, in the third aspect,
a heating temperature of the transfer pipe is 150°C or higher and 250°C or lower.

The crystallinity of the heated powder can be enhanced more efficiently by setting the temperature of the heated gas stream of the transfer pipe at 150°C or higher and 250°C or lower when supplying the heated powder to the separation apparatus. Therefore, a crystalline sulfide solid electrolyte having higher homogeneity and high ionic conductivity can be easily obtained.

The method for producing a crystalline sulfide solid electrolyte according to a fifth aspect of the present embodiment is a method including, in the third or fourth aspect,
subjecting the collected material obtained by the collecting to mechanical treatment; and
heating the mechanically treated material obtained by the mechanical treatment in a heated gas stream.

The collected material collected in the separation apparatus is the heated powder obtained by the heating, that is, a crystalline sulfide solid electrolyte. When using the crystalline sulfide solid electrolyte in applications such as the electrolyte layers, positive electrodes, or negative electrodes of lithium ion batteries, it is preferable to adjust its morphology (a term which, in the context of the present description, refers to the form (shape) of the solid electrolyte, primarily its average particle diameter and specific surface area) according to these applications. It is both efficient and preferable to perform the morphology adjustment through mechanical treatment.

Furthermore, since the mechanically treated material obtained through the mechanical treatment may undergo partial amorphization, it is preferable to heat the mechanically treated material again in a heated gas stream. By heating again in a heated gas stream, the crystallinity of the heated powder is enhanced, and thus a crystalline sulfide solid electrolyte having higher homogeneity and high ionic conductivity can be easily obtained. In addition, when a solvent is used during the mechanical treatment, the solvent can be removed by heating again in a heated gas stream.

The method for producing a crystalline sulfide solid electrolyte according to a sixth aspect of the present embodiment is a method in which, in the fifth aspect,
the temperature of the heated gas stream is 150°C or higher and 250°C or lower.

In the case of indirect heating of the mechanically treated material in a heated gas stream, the temperature of the heated gas stream is preferably 150°C or higher and 250°C or lower, similar to the temperature specified in the second aspect. Crystallization can be carried out more efficiently by heating with the temperature of the heated gas stream set within the above range. Therefore, a crystalline sulfide solid electrolyte having higher homogeneity and high ionic conductivity can be easily obtained. In addition, in cases where the mechanical treatment is performed using a solvent, the solvent can be removed efficiently.

The method for producing a crystalline sulfide solid electrolyte according to a seventh aspect of the present embodiment is a method in which, in any one of the first to sixth aspects,
the heating in the heated gas stream is performed using a pneumatic conveying dryer.

Although there are no particular restrictions on the type of heating device used for the heating as long as the heating is performed in a heated gas stream, it is preferable to use a pneumatic conveying dryer. The use of a pneumatic conveying dryer facilitates stable heating in the heated gas stream. As a result, the crystallinity of both the amorphous sulfide solid electrolyte, which is the object to be heated, and the mechanically treated material. Therefore, a crystalline sulfide solid electrolyte having higher homogeneity and high ionic conductivity can be easily obtained.

The method for producing a crystalline sulfide solid electrolyte according to an eighth aspect of the present embodiment is a method in which, in any one of the first to seventh aspects,
the crystalline sulfide solid electrolyte has a thio-LISICON region II type crystal structure.

The crystalline sulfide solid electrolyte having a thio-LISICON region II type crystal structure is known as a solid electrolyte exhibiting high ionic conductivity. The solid electrolyte produced by the method for producing a crystalline sulfide solid electrolyte according to the present embodiment is not particularly limited provided that it has crystallinity, that is, a crystal structure. However, it is preferable to produce a solid electrolyte having high ionic conductivity, such as a crystalline sulfide solid electrolyte having a thio-LISICON Region II type crystal structure.

The method for producing a crystalline sulfide solid electrolyte according to a ninth aspect of the present embodiment is
a method for producing a crystalline sulfide solid electrolyte including the following steps (i) to (iii) in sequence,
and the method for producing a crystalline sulfide solid electrolyte according to a tenth aspect is a production method which, in the ninth aspect, further includes the following steps (iv) to (vi) in sequence.
   (i) Mixing a raw material-containing substance containing a lithium atom, a phosphorus atom, a sulfur atom, and a halogen atom using a solvent
   (ii) Drying a fluid obtained by the mixing to remove the solvent
   (iii) Heating an amorphous sulfide solid electrolyte obtained by removing the solvent in step (ii) in a heated gas stream
   (iv) Transferring a heated powder obtained by the heating in step (iii) to a separation apparatus through a transfer pipe, and collecting the powder using the separation apparatus
   (v) Subjecting the collected material obtained by the collecting to mechanical treatment
   (vi) Heating the mechanically treated material obtained by the mechanical treatment in a heated gas stream

Steps (i) and (ii) described above correspond to the step of obtaining the amorphous sulfide solid electrolyte in the first aspect, and step (iii) corresponds to the step of heating in a heated gas stream in the first aspect. According to the production method of the ninth aspect, by carrying out the step of obtaining the amorphous sulfide solid electrolyte in the first aspect through steps (i) and (ii), the amorphous sulfide solid electrolyte can be obtained more efficiently. Moreover, the production method according to the tenth aspect includes steps (iv) and (v) in addition to steps (i) to (iii) included in the production method according to the ninth aspect, and as explained in the fifth aspect, a crystalline sulfide solid electrolyte having higher homogeneity and high ionic conductivity can be easily obtained.

The apparatus for producing a crystalline sulfide solid electrolyte according to an eleventh aspect of the present embodiment is an apparatus including
a device for producing an amorphous sulfide solid electrolyte containing a lithium atom, a phosphorus atom, a sulfur atom, and a halogen atom; and
a heating device for heating the amorphous sulfide solid electrolyte in a heated gas stream.

Since the production apparatus according to the eleventh aspect includes a device for producing the amorphous sulfide solid electrolyte and a device for heating the amorphous sulfide solid electrolyte, it facilitates the easy implementation of the production method, and thus enables the more efficient production of sulfide solid electrolytes having high ionic conductivity, and can also be readily adapted for mass production.

Furthermore, the apparatus for producing a crystalline sulfide solid electrolyte according to a twelfth aspect is, in the eleventh aspect,
an apparatus in which
the device for producing the amorphous sulfide solid electrolyte includes
a mixing device mixing a raw material-containing substance containing a lithium atom, a phosphorus atom, a sulfur atom, and a halogen atom using a solvent; and
a drying device drying a fluid obtained from the mixing device to remove the solvent,
and the apparatus for producing a crystalline sulfide solid electrolyte according to a thirteenth aspect is, in the eleventh or twelfth aspect,
an apparatus further including
a separation apparatus collecting a heated powder obtained from the heating device;
a mechanical treatment device mechanically treating a collected material obtained from the separation apparatus;
a heating device heating the mechanically treated material obtained by the mechanical treatment; and
a transfer pipe transferring the heated powder from the heating device to the separation apparatus.

Since the device for producing the amorphous sulfide solid electrolyte includes a device for mixing a raw material-containing substance and a drying device, the production apparatus according to the twelfth aspect becomes an apparatus that can produce the amorphous sulfide solid electrolyte more efficiently. Moreover, the production apparatus according to the thirteenth aspect is an apparatus including a separation apparatus, a mechanical treatment device, a heating device, and a transfer pipe, and by incorporating the mechanical treatment device, a crystalline sulfide solid electrolyte having higher homogeneity and high ionic conductivity can be easily obtained.

### (Solid Electrolyte)

In the description herein, the "solid electrolyte" means an electrolyte that maintains a solid state at 25°C under a nitrogen atmosphere. The sulfide solid electrolyte in the present embodiment is a solid electrolyte that contains a lithium atom, a sulfur atom, a phosphorus atom, and a halogen atom, and has ionic conductivity attributed to the lithium atom.

The "solid electrolyte" contains both of an amorphous solid electrolyte and a crystalline solid electrolyte.

In the description herein, the crystalline solid electrolyte is a solid electrolyte in which a peak derived from the solid electrolyte is observed in an X-ray diffraction pattern in X-ray diffractometry, and the presence or absence of a peak derived from a raw material of the solid electrolyte is not considered. That is, the crystalline solid electrolyte includes a crystal structure derived from the solid electrolyte, and a part thereof may be a crystal structure derived from the solid electrolyte, or the whole thereof may be a crystal structure derived from the solid electrolyte. As long as the crystalline solid electrolyte has the X-ray diffraction pattern as described above, a part of the crystalline solid electrolyte may include an amorphous solid electrolyte. Therefore, the crystalline solid electrolyte includes a so-called glass ceramic obtained by heating an amorphous solid electrolyte to a crystallization temperature or higher.

In addition, in the description herein, the amorphous solid electrolyte is a halo pattern in which a peak other than a peak derived from a material is not substantially observed in an X-ray diffraction pattern in X-ray diffractometry, and the presence or absence of a peak derived from a raw material of the solid electrolyte is not considered.

### [Method for Producing Crystalline Sulfide Solid Electrolyte]

The method for producing a crystalline sulfide solid electrolyte according to the present embodiment is
a method for producing a crystalline sulfide solid electrolyte including
obtaining an amorphous sulfide solid electrolyte containing a lithium atom, a phosphorus atom, a sulfur atom, and a halogen atom; and
heating the amorphous sulfide solid electrolyte in a heated gas stream.

### (Obtaining Amorphous Sulfide Solid Electrolyte)

The production method of the present embodiment includes obtaining an amorphous sulfide solid electrolyte containing a lithium atom, a phosphorus atom, a sulfur atom, and a halogen atom.

In the production method of the present embodiment, first, obtaining an amorphous sulfide solid electrolyte will be described.

In the production method according to the present embodiment, the method of obtaining an amorphous sulfide solid electrolyte is not particularly restricted as long as an amorphous sulfide solid electrolyte containing a lithium atom, a phosphorus atom, a sulfur atom, and a halogen atom can be obtained. For example, a production method including mixing a raw material-containing substance containing a lithium atom, a sulfur atom, a phosphorus atom, and a halogen atom is preferably exemplified.

### (Raw Material-Containing Substance)

The raw material-containing substance contains a lithium atom, a sulfur atom, a phosphorus atom, and a halogen atom, and is specifically a containing substance containing a compound (hereinafter, also referred to as a "solid electrolyte raw material") having at least one atom selected from these atoms. The raw material-containing substance preferably contains two or more of the solid electrolyte raw materials.

Examples of the solid electrolyte raw material contained in the raw material-containing substance includes, a raw material containing at least two kinds of atoms selected from the above four kinds of atoms, such as lithium sulfides; lithium halides such as lithium fluoride, lithium chloride, lithium bromide, and lithium iodide; alkali metal halides such as sodium halides, such as sodium iodide, sodium fluoride, sodium chloride, and sodium bromide; phosphorus sulfides such as diphosphorus trisulfide (P₂S₃) and diphosphorus pentasulfide (P₂S₅); phosphorus halides such as various phosphorus fluorides (PF₃ and PF₅), various phosphorus chlorides (PCl₃, PCl₅, and P₂Cl₄), various phosphorus bromides (PBr₃ and PBr₅), and various phosphorus iodides (PI₃ and P₂I₄); and thiophosphoryl halides such as thiophosphoryl fluoride (PSF₃), thiophosphoryl chloride (PSCl₃), thiophosphoryl bromide (PSBr₃), thiophosphoryl iodide (PSI₃), thiophosphoryl dichloride fluoride (PSCl₂F), and thiophosphoryl dibromide fluoride (PSBr₂F); and halogen simple substances such as fluorine (F₂), chlorine (Cl₂), bromine (Br₂), and iodine (I₂), and bromine (Br₂) and iodine (I₂) are representative and preferred.

Examples that can be used as the solid electrolyte raw materials other than the above include a solid electrolyte raw material containing at least one atom selected from the above four kinds of atoms and containing atoms other than the four kinds of atoms, more specifically, lithium compounds such as lithium oxide, lithium hydroxide, and lithium carbonate; alkali metal sulfides such as sodium sulfide, potassium sulfide, rubidium sulfide, cesium sulfide; metal sulfides such as silicon sulfide, germanium sulfide, boron sulfide, gallium sulfide, tin sulfide (SnS, SnS₂), aluminum sulfide, and zinc sulfide; phosphate compounds such as sodium phosphate and lithium phosphate; alkali metal halides other than lithium, such as sodium halides such as sodium iodide, sodium fluoride, sodium chloride, and sodium bromide; metal halides such as aluminum halide, silicon halide, germanium halide, arsenic halide, selenium halide, tin halide, antimony halide, tellurium halide, and bismuth halide; and phosphorus oxyhalides such as phosphorus oxychloride (POCl₃) and phosphorus oxybromide (POBr₃).

In the present embodiment, from the viewpoint of obtaining a sulfide solid electrolyte having higher ionic conductivity more easily, a chlorine atom, a bromine atom, and an iodine atom are preferable, and a bromine atom and an iodine atom are more preferable among the halogen atoms. In addition, these atoms may be used alone or in combination of a plurality of kinds. That is, taking lithium halide as an example, lithium bromide may be used alone, lithium iodide may be used alone, or lithium bromide and lithium iodide may be used in combination.

In addition, from a similar viewpoint, as the compound that can be used as the solid electrolyte raw material, among the above-described compounds, lithium sulfide; phosphorus sulfides such as diphosphorus trisulfide (P₂S₃) and diphosphorus pentasulfide (P₂S₅); halogen simple substances such as fluorine (F₂), chlorine (Cl₂), bromine (Br₂), and iodine (I₂); and lithium halides such as lithium fluoride, lithium chloride, lithium bromide, and lithium iodide are preferable. Among phosphorus sulfides, phosphorus pentasulfide is preferable; among halogen simple substances, chlorine (Cl₂), bromine (Br₂), and iodine (I₂) are preferable; and among lithium halides, lithium chloride, lithium bromide, and lithium iodide are preferable.

In the present embodiment, Li₃PS₄ having a PS₄ structure can also be used as the solid electrolyte raw material. Specifically, Li₃PS₄ may be prepared by, for example, producing it in advance and used as the raw material. In this case, preferred examples of the combination of the solid electrolyte raw materials contained in the raw material-containing substance include a combination of Li₃PS₄ and the lithium halide, a combination of Li₃PS₄ and the simple halogen, and a combination of Li₃PS₄, the lithium halide, and the simple halogen.

Preferred combinations of the compounds that can be used for the raw materials preferably include, for example, a combination of lithium sulfide, diphosphorus pentasulfide, and a lithium halide, and a combination of lithium sulfide, diphosphorus pentasulfide, and a halogen simple substance; and as the lithium halide, lithium bromide, lithium iodide, and lithium chloride are preferred, and as the halogen simple substance, chlorine, bromine and iodine are preferred.

When lithium sulfide is used as a compound containing a lithium atom, the lithium sulfide is preferably particulate.

The average particle diameter (D₅₀) of the lithium sulfide particles is preferably 0.1 µm or more and 1000 µm or less, more preferably 0.5 µm or more and 100 µm or less, and still more preferably 1 µm or more and 20 µm or less. In the description herein, the average particle diameter (D₅₀) is a particle diameter which reaches 50% (volume-based) of the whole by sequentially integrating particles from the smallest particle diameter when a particle size distribution integration curve is drawn, and is an average particle diameter in which the volume distribution can be measured using, for example, a laser diffraction/scattering type particle size distribution measuring device. In addition, among the raw materials exemplified above, it is preferable that the solid raw material has an average particle diameter similar to that of the lithium sulfide particles described above, that is, it is preferable that the solid raw material is within the same range as the average particle diameter of the lithium sulfide particles described above.

When the raw material-containing substance contains lithium sulfide, diphosphorus pentasulfide, and lithium halide, the proportion of lithium sulfide with respect to the total of lithium sulfide and diphosphorus pentasulfide is preferably 60% by mole or more, more preferably 65% by mole or more, still more preferably 70% by mole or more, and yet still more preferably 74% by mole or more from the viewpoint of obtaining higher chemical stability and obtaining higher ionic conductivity, and the upper limit thereof is preferably 85% by mole or less, more preferably 83% by mole or less, and still more preferably 80% by mole or less.

In addition, in the case of attempting to obtain a sulfide solid electrolyte having a thio-LISICON Region II type crystal structure, in addition to the above ranges, particularly 74 to 78.5% by mole, 74 to 78% by mole, and 74 to 76% by mole are preferable, and in the case of attempting to obtain a sulfide solid electrolyte having an argyrodite type crystal structure, in addition to the above ranges, particularly 76 to 83% by mole, 77 to 80% by mole, and 78 to 80% by mole are preferable.

In a case where lithium sulfide, diphosphorus pentasulfide, a lithium halide, and other raw materials to be used as necessary are used, the content of lithium sulfide and diphosphorus pentasulfide with respect to the total of these raw materials is preferably 50% by mole or more, more preferably 55% by mole or more, and still more preferably 60% by mole or more, and the upper limit thereof is preferably 100% by mole or less, more preferably 90% by mole or less, still more preferably 85% by mole or less, and even more preferably 80% by mole or less.

In addition, in the case of attempting to obtain a sulfide solid electrolyte having a thio-LISICON Region II type crystal structure, in addition to the above ranges, particularly 65 to 90% by mole, 70 to 85% by mole, and 75 to 83% by mole are preferable, and in the case of attempting to obtain a sulfide solid electrolyte having an argyrodite type crystal structure, in addition to the above ranges, particularly 50 to 78% by mole, 55 to 70% by mole, and 55 to 65% by mole are preferable.

In a case where the raw material-containing substance contains lithium bromide and lithium iodide in combination as lithium halide, from the viewpoint of improving the ionic conductivity, the proportion of lithium bromide with respect to the total of lithium bromide and lithium iodide is preferably 1% by mole or more, more preferably 20% by mole or more, still more preferably 35% by mole or more, and yet still more preferably 45% by mole or more, and the upper limit thereof is preferably 99% by mole or less, more preferably 90% by mole or less, still more preferably 75% by mole or less, and yet still more preferably 60% by mole or less.

In addition, in a case where the raw material-containing substance contains lithium bromide and lithium chloride in combination as lithium halide, from the viewpoint of improving the ionic conductivity, the proportion of lithium bromide with respect to the total of lithium bromide and lithium chloride is preferably 1% by mole or more, more preferably 15% by mole or more, still more preferably 25% by mole or more, and yet still more preferably 35% by mole or more, and the upper limit thereof is preferably 99% by mole or less, more preferably 75% by mole or less, still more preferably 60% by mole or less, and yet still more preferably 45% by mole or less.

In a case where the raw material-containing substance contains a halogen simple substance as a raw material and contains lithium sulfide and diphosphorus pentasulfide, the proportion of the number of moles of lithium sulfide excluding lithium sulfide in the same number of moles as the number of moles of the halogen simple substance with respect to the total number of moles of lithium sulfide and diphosphorus pentasulfide excluding lithium sulfide in the same number of moles as the number of moles of the halogen simple substance is preferably in a range of 60 to 90%, more preferably in a range of 65 to 85%, still more preferably in a range of 68 to 82%, yet still more preferably in a range of 72 to 78%, and particularly preferably in a range of 73 to 77%. This is because higher ionic conductivity can be obtained with these ratios.

Further, from the same viewpoint, in a case where the raw material-containing substance contains lithium sulfide, diphosphorus pentasulfide, and a halogen simple substance, the content of the halogen simple substance to the total amount of the lithium sulfide, the diphosphorus pentasulfide, and the halogen simple substance is preferably 1 to 50% by mole, more preferably 2 to 40% by mole, still more preferably 3 to 25% by mole, and yet still more preferably 3 to 15% by mole.

In a case where the raw material-containing substance contains lithium sulfide, diphosphorus pentasulfide, a halogen simple substance, and lithium halide, the content (α% by mole) of the halogen simple substance and the content (β% by mole) of the lithium halide to the total amount of the lithium sulfide, the diphosphorus pentasulfide, the halogen simple substance, and the lithium halide preferably satisfy the following formula (1), more preferably satisfy the following formula (2), still more preferably satisfy the following formula (3), and yet still more preferably satisfy the following formula (4). $2 \leq \left(2α+β\right) \leq 100$ (1) $4 \leq \left(2α+β\right) \leq 80$ (2) $6 \leq \left(2α+β\right) \leq 50$ (3) $6 \leq \left(2α+β\right) \leq 30$ (4)

In addition, in a case where the raw material-containing substance contains Li₃PS₄, the content of Li₃PS₄ with respect to the total raw materials contained in the raw material-containing substance is preferably 60 to 100% by mole, more preferably 65 to 90% by mole, and still more preferably 70 to 80% by mole.

### (Mixing)

The mixing of two or more raw materials selected from compounds containing at least one atom of a lithium atom, a phosphorus atom, a sulfur atom, and a halogen atom can be performed, for example, using a mixer. Alternatively, the mixing can be performed using a stirrer or a pulverizer.

This is because the mixing of the raw materials can occur even when the stirrer is used, and the pulverization of the raw materials occurs when the pulverizer is used, but the mixing also occurs at the same time. That is, it can also be said that the sulfide solid electrolyte used in the present embodiment can be produced by stirring, mixing, pulverizing, or a treatment combining any of these of two or more raw materials selected from compounds containing at least one atom of a lithium atom, a sulfur atom, a phosphorus atom, and a halogen atom.

Examples of the stirrer and the mixer include a mechanical stirring type mixer which is provided with a stirring blade in a reaction tank and is capable of stirring (which can also be referred to as mixing by stirring or stirring and mixing). Examples of the mechanical stirring type mixer include a high-speed stirring type mixer and a double-arm type mixer. Further, examples of the high-speed stirring type mixer include a vertical shaft rotation type mixer and a horizontal shaft rotation type mixer, and a mixer of either type may be used.

In a case where the mechanical stirring type mixer is used, the rotation speed of the stirring blade may be appropriately adjusted according to the capacity and temperature of the fluid in the reaction tank, and the shape of the stirring blade, and there is no particular limitation; however, the rotation speed of the stirring blade may be usually set to about 5 rpm or more and 400 rpm or less. From the viewpoint of more efficiently promoting the reaction of raw materials, the rotation speed of the stirring blade is preferably 10 rpm or more and 300 rpm or less, more preferably 15 rpm or more and 250 rpm or less, and still more preferably 20 rpm or more and 200 rpm or less.

The temperature condition at the time of mixing using a mixer is not particularly limited, and is, for example, usually -30 to 120°C, preferably -10 to 100°C, more preferably 0 to 80°C, and still more preferably 10 to 60°C. The mixing time is usually 0.1 to 500 hours, and from the viewpoint of making the dispersion state of the raw materials more uniform and promoting the reaction, it is preferably 1 to 450 hours, more preferably 10 to 425 hours, still more preferably 20 to 400 hours, and even more preferably 40 to 375 hours.

The method of performing mixing accompanied by pulverization using a pulverizer is a method that has been conventionally adopted as a solid phase method (mechanical milling method). As the pulverizer, for example, a media type pulverizer using a pulverization medium can be used.

The media type pulverizer is roughly classified into a container driving-type pulverizer and a media agitating-type pulverizer. Examples of the container driving-type pulverizer include a ball mill and a bead mill equipped with a stirring tank, a pulverization tank, or a combination thereof. Examples of the media agitating-type pulverizer include various pulverizers such as impact type pulverizers such as a cutter mill, a hammer mill, and a pin mill; tower type pulverizers such as a tower mill; stirring tank type pulverizers such as an attritor, an aquamizer, and a sand grinder; circulation tank type pulverizers such as a viscomill and a pearl mill; circulation tube type pulverizers; annular type pulverizers such as CoBall Mill; continuous dynamic type pulverizers; and single- or multi-screw kneaders. Among them, a ball mill and a bead mill exemplified as the container driving-type pulverizer are preferable, and the planetary mill is more preferable, in consideration of easiness of adjustment of the particle diameter of the sulfide to be obtained.

These pulverizers can be appropriately selected according to a desired scale, and in the case of a relatively small scale, a container driving-type pulverizer such as a ball mill or a bead mill can be used, and in the case of a large scale or mass production, a pulverizer of another type may be used.

In addition, as will be described later, in the case of a liquid state accompanied by a liquid such as a solvent at the time of mixing or a slurry state, a wet pulverizer capable of corresponding to wet pulverization is preferable.

Representative examples of the wet pulverizer include a wet bead mill, a wet ball mill, and a wet vibration mill, and a wet bead mill using beads as pulverization media is preferable from the viewpoint that the conditions of the pulverization operation can be freely adjusted and it is easy to correspond to those having a smaller particle diameter. In addition, it is also possible to use a dry pulverizer, such as a dry media type pulverizer such as a dry bead mill, a dry ball mill, and a dry vibration mill, and a dry non-media type pulverizer such as a jet mill.

In addition, when the mixing object is in a liquid state or a slurry state, a circulation type pulverizer capable of performing circulation operation for circulating the mixture as necessary can also be used. Specific examples thereof include a pulverizer having a form in which the object is circulated between a pulverizer (pulverizing and mixing machine) for pulverizing the slurry and a temperature holding tank (reaction vessel).

In addition, in a case where a ball mill or a bead mill is used, the rotation speed changes depending on the scale of the treatment and cannot be said to be general, but the rotation speed is usually 10 rpm or more, preferably 20 rpm or more, and more preferably 50 rpm or more, and the upper limit thereof is usually 1,000 rpm or less, preferably 900 rpm or less, more preferably 800 rpm or less, and still more preferably 700 rpm or less.

The pulverization time in this case varies depending on the scale of the treatment and cannot be said to be general, but is usually 0.5 hours or more, preferably 1 hour or more, more preferably 5 hours or more, and still more preferably 10 hours or more, and the upper limit thereof is usually 100 hours or less, preferably 72 hours or less, more preferably 48 hours or less, and still more preferably 36 hours or less.

### (Solvent)

In the mixing, a solvent may be added to and mixed with the raw materials. As the solvent, various solvents widely referred to as organic solvents can be used.

As the solvent, solvents that have been conventionally used in the production of solid electrolytes can be widely adopted, and examples thereof include hydrocarbon solvents such as aliphatic hydrocarbon solvents, alicyclic hydrocarbon solvents, and aromatic hydrocarbon solvents.

Examples of the aliphatic hydrocarbon include hexane, pentane, 2-ethylhexane, heptane, octane, decane, undecane, dodecane, and tridecane; examples of the alicyclic hydrocarbon include cyclohexane and methylcyclohexane; and examples of the aromatic hydrocarbon solvent include benzene, toluene, xylene, mesitylene, ethylbenzene, tert-butylbenzene, trifluoromethylbenzene, and nitrobenzene.

Further, in addition to the aforementioned hydrocarbon solvent, a solvent containing a hetero atom such as an atom other than a carbon atom and a hydrogen atom, for example, a nitrogen atom, an oxygen atom, a sulfur atom, and a halogen atom is also exemplified. Such a solvent has a property of easily forming a complex with a compound or the like containing a lithium atom, a phosphorus atom, a sulfur atom, and a halogen atom used as a raw material (hereinafter, such a solvent is also referred to as a "complexing agent"), and has a property of easily keeping the halogen atom in the structure of the sulfide solid electrolyte, and thus is useful in that a higher ionic conductivity is obtained. Since the complex converts into an amorphous sulfide solid electrolyte upon removal of the complexing agent by drying, which will be described later, from the complex, it may also be referred to as an electrolyte precursor.

Preferred examples of the complexing agent, specifically complexing agents containing an oxygen atom as a heteroatom, include an ether solvent, an ester solvent, an alcohol solvent, an aldehyde solvent, and a ketone solvent.

Preferred examples of the ether solvent include aliphatic ethers such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; alicyclic ethers such as ethylene oxide, propylene oxide, tetrahydrofuran, tetrahydropyran, dimethoxytetrahydrofuran, cyclopentyl methyl ether, and dioxane; heterocyclic ethers such as furan, benzofuran, and benzopyran; and aromatic ethers such as methyl phenyl ether (anisole), ethyl phenyl ether, dibenzyl ether, and diphenyl ether.

Preferred examples of the ester solvent include methyl formate, ethyl formate, methyl acetate, ethyl acetate, propyl acetate, and isopropyl acetate; aliphatic esters such as methyl propionate, ethyl propionate, dimethyl oxalate, diethyl oxalate, dimethyl malonate, diethyl malonate, dimethyl succinate, and diethyl succinate; alicyclic esters such as methyl cyclohexanecarboxylate, ethyl cyclohexanecarboxylate, and dimethyl cyclohexanedicarboxylate; heterocyclic esters such as methyl pyridinecarboxylate, methyl pyrimidincarboxylate, acetolactone, propiolactone, butyrolactone, and valerolactone; and aromatic esters such as methyl benzoate, ethyl benzoate, dimethyl phthalate, diethyl phthalate, butylbenzyl phthalate, dicyclohexyl phthalate, trimethyl trimellitate, and triethyl trimellitate.

In addition, alcohol solvents such as ethanol and butanol; aldehyde solvents such as formaldehyde, acetaldehyde, and dimethylformamide; and ketone solvents such as acetone and methyl ethyl ketone are preferably exemplified.

Examples of the complexing agent containing a nitrogen atom as a hetero atom include solvents having a group containing a nitrogen atom, such as an amino group, an amide group, a nitro group, and a nitrile group.

Preferred examples of the solvent having an amino group include aliphatic amines such as ethylenediamine, diaminopropane, dimethylethylenediamine, diethylethylenediamine, dimethyl diaminopropane, tetramethyldiamino methane, tetramethylethylenediamine (TMEDA), and tetramethyldiaminopropane (TMPDA); alicyclic amines such as cyclopropanediamine, cyclohexanediamine, and bisaminomethylcyclohexane; heterocyclic amines such as isophoronediamine, piperazine, dipiperidylpropane, and dimethylpiperazine; and aromatic amines such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Also preferred are nitrile solvents such as acetonitrile and acrylonitrile; and solvents containing a nitrogen atom such as dimethylformamide, nitrobenzene, and dimethylacetamide.

Preferred examples of the solvent containing a halogen atom as a hetero atom include chloroform, carbon tetrachloride, dichloromethane, chlorobenzene, dichlorobenzene, trifluoromethylbenzene, chlorotoluene, and bromobenzene.

Preferred examples of the solvent containing a sulfur atom include dimethyl sulfoxide and carbon disulfide.

In a case where a solvent is used, the amount of the solvent used is preferably 100 mL or more, more preferably 200 mL or more, still more preferably 250 mL or more, and yet still more preferably 300 mL or more, and the upper limit thereof is preferably 3000 mL or less, more preferably 2500 mL or less, still more preferably 2000 mL or less, and yet still more preferably 1550 mL or less, with respect to 1 kg of the total amount of the raw materials. When the amount of the solvent used is within the above range, the raw materials can be efficiently reacted.

### (Drying)

When the mixing is performed using a solvent, the method may include drying a fluid (usually, slurry) obtained by the mixing after the mixing is performed. The amorphous sulfide solid electrolyte is obtained by removing the complexing agent from the complex (electrolyte precursor) containing the complexing agent when the complexing agent is used as the solvent, by removing the complexing agent from the complex (electrolyte precursor) containing the complexing agent and removing the solvent when the complexing agent and the solvent are used in combination, or by removing the solvent when the solvent other than the complexing agent is used. The obtained amorphous sulfide solid electrolyte exhibits ionic conductivity attributed to lithium atoms.

The fluid obtained by mixing can be dried at a temperature according to the type of the solvent. For example, the drying can be performed at a temperature equal to or higher than the boiling point of the solvent (including a complexing agent).

In addition, the drying can be performed usually at 5°C to 100°C, preferably at 10°C to 85°C, more preferably at 15°C to 70°C, and still more preferably at about room temperature (23°C) (for example, about room temperature ± 5°C) by drying under reduced pressure (vacuum drying) using a vacuum pump or the like to volatilize the complexing agent and the solvent which is used as necessary. The method of drying may be performed, for example, using a thermal dryer capable of drying by heating to the aforementioned drying temperature and/or by reducing pressure; alternatively, it is also possible to employ a pneumatic conveying dryer, a spray dryer, or a fluidized dryer capable of heating in a heated gas stream, used for drying the amorphous sulfide solid electrolyte described later. Among these, it is preferable to use a pneumatic conveying dryer, a spray dryer, and a fluidized dryer, and in particular, a pneumatic conveying dryer.

Drying may be performed by filtering the fluid obtained by the aforementioned mixing using a glass filter, solid-liquid separation by decantation, or solid-liquid separation using a centrifugal separator. When a solvent other than the complexing agent is used, an amorphous sulfide solid electrolyte is obtained by solid-liquid separation. When a complexing agent is used as the solvent, solid-liquid separation is performed, and then drying is performed under the above temperature conditions to remove the complexing agent taken into the complex (electrolyte precursor).

In the solid-liquid separation, specifically, after a fluid is transferred to a container and the solid content contained in the fluid (amorphous sulfide solid electrolyte or complex (electrolyte precursor)) is precipitated, decantation for removing the complexing agent and the solvent as a supernatant, or filtration using a glass filter having a pore size of, for example, about 10 to 200 µm, preferably 20 to 150 µm, is easy.

The sulfide solid electrolyte obtained by performing the aforementioned mixing, or in the case of using a solvent, the sulfide solid electrolyte obtained by removing the solvent by the aforementioned drying exhibits ionic conductivity attributed to lithium atoms, and is an amorphous sulfide solid electrolyte.

### [Heating in Heated Gas Stream]

The production method of the present embodiment includes heating the amorphous sulfide solid electrolyte obtained as described above in a heated gas stream, and can convert the amorphous sulfide solid electrolyte into a crystalline sulfide solid electrolyte. As previously described, heating the amorphous sulfide solid electrolyte in a heated gas stream not only enables crystallization to occur in an extremely short period but also easily ensures a uniform thermal history regardless of the quantity of the object to be heated; consequently, a crystalline sulfide solid electrolyte having homogeneity and high ionic conductivity can be efficiently obtained. Moreover, it can also be readily adapted for mass production.

As the method for heating in a heated gas stream, there are no particular restrictions, provided that the amorphous sulfide solid electrolyte, which is the object to be heated, can be heated by the heated gas stream; however, it is preferable to perform heating using a heating device such as a pneumatic conveying dryer, a spray dryer, and a fluidized dryer. Among these heating devices, a pneumatic conveying dryer is preferred, from the viewpoint of achieving crystallization more stably and efficiently in a short period, as well as heating while maintaining a uniform thermal history, regardless of the quantity of the object to be heated.

### (Pneumatic Conveying Dryer)

The pneumatic conveying dryer is a device capable of heating an object to be heated by a heated gas stream by supplying the object to be heated into a pipe to which the heated gas stream is supplied, and a direct hot air type pneumatic conveying dryer in which the heated gas stream and the object to be heated are in direct contact with each other is preferable.

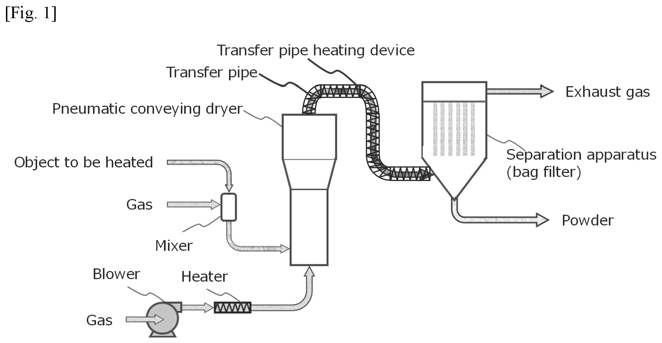

As the pneumatic conveying dryer, for example, as shown in Fig. 1, a pneumatic conveying dryer including a heating portion having a cylindrical container shape (also referred to as a "cylindrical container type pneumatic conveying dryer") is preferably used. When the heating portion is a cylindrical container, the cross-sectional areas of the object to be heated and the flow path of the heated gas stream are widened. Therefore, even in a case where the object to be heated adheres to and solidifies on the inner wall surface and the cross-sectional area of the flow path is reduced due to the adhesion and solidification, it is possible to suppress the influence on the fluctuation due to the turbulence and the blockage of the flow. As a result, stable drying is easily performed. In addition, it is suitable for mass treatment as compared with other types to be described later; moreover, it becomes easy to continue long-term operation, and it is easy to perform visual inspection and open cleaning, so that it is also excellent in maintainability.

As the pneumatic conveying dryer, it is preferable to use a pneumatic conveying dryer having a structure capable of heating an object to be heated while swirling a heated gas stream, for example, a pneumatic conveying dryer in which a dispersion plate is provided so that the heated gas stream swirls in the pipe, and a pneumatic conveying dryer in which at least a part of the pipe has an annular shape or a semicircular shape (also referred to as a "circular annular pneumatic conveying dryer" and a "semicircular pneumatic conveying dryer", respectively). In a case where a pneumatic conveying dryer having such a structure is adopted, it is possible to suppress the adhesion of the amorphous sulfide solid electrolyte, which is the object to be heated, to the inner wall. Furthermore, it is possible to perform classification by centrifugal force by using the mass difference corresponding to the residual amount when a solvent (including a complexing agent) remains in the amorphous sulfide solid electrolyte, and thus it is possible to efficiently remove the solvent (including a complexing agent) and to perform crystallization.

In addition, it is possible to further reduce the size of the pneumatic conveying dryer, and it is possible to save space.

As the pneumatic conveying dryer, for example, a pneumatic conveying dryer of a type in which a vertically long pipe that holds a length necessary for heating is used, and a heated gas stream is introduced from below the vertically long pipe and is heated while being co-flowed with the object to be heated (also referred to as a "vertically long pipe type pneumatic conveying dryer") is preferably used. When a vertically long pipe type pneumatic conveying dryer is used, since the flow direction of the object to be heated and the heated gas stream can be limited upward, it is possible to cope with changes in the flow rate, particle diameter, and density of the object to be heated, and stable drying becomes easy. In addition, since the structure is simple, even if the object to be heated adheres to the inner wall, the peeling operation can be easily performed, and thus it is easy to cope with long-term operation. Further, since it is a type that can cope with an increase in the processing amount and the drying capacity by extending the dimension in the vertical direction, the installation area can be suppressed to be smaller than that of other types, and there is an advantage in terms of equipment installation.

In the vertically long pipe type pneumatic conveying dryer, the pipe diameters of the vertically long pipe portions may be the same, or may not be the same in order to adjust the state of heating to the object to be heated, and may have a partially wide or narrow portion.

A pneumatic conveying dryer can be preferably employed regardless of the state of the amorphous sulfide solid electrolyte, which is the object to be heated, whether it is in a powder form or in a liquid form (such as a slurry) containing a solvent.

### (Other Heating Devices)

A spray dryer is a dryer that dries a fluid (including slurries) in a liquid form, which is an object to be heated, by spraying the fluid from a spray nozzle into a heated gas stream maintained at a predetermined temperature. Dryers commercially available as "spray dryer" or the like may be utilized as the spray dryer.

Furthermore, examples of the fluidized dryers include medium-fluidized dryers (for example, some of which are commercially available under names such as "slurry dryers"), as well as band-fluidized-bed dryers utilizing a band conveyor. Examples of the media used in the medium-fluidized dryers include media particles, such as ceramic balls and zirconia beads. The medium-fluidized dryer is a dryer that heats an object to be heated via a fluidized bed formed by these media particles, and since a heated gas stream is utilized to form the fluidized bed, the heating is, in effect, carried out in the heated gas stream.

These spray dryers and fluidized dryers can be employed regardless of whether the amorphous sulfide solid electrolyte, which is the object to be heated, is in a powder form or in a liquid form (such as a slurry) containing a solvent; however, given the characteristics of the devices, they are particularly well-suited to the case where the amorphous sulfide solid electrolyte is in a liquid form containing a solvent.

The gas used for the heated gas stream heating the object to be heated may be adopted without particular limitation as long as it is a gas. For example, various gases such as an inert gas such as nitrogen and argon, and air can be adopted. In consideration of the cost, it is preferable to use nitrogen and air, and in consideration of improving the ionic conductivity, it is preferable to use nitrogen. These gases may be used singly or in a mixture of a plurality of kinds thereof.

In addition, the dew point temperature of the gas is preferably -10°C or lower, more preferably -20°C or lower, and still more preferably -30°C or lower from the viewpoint of suppressing a deterioration in the quality of the sulfide solid electrolyte caused by moisture contained in the gas.

The temperature of the heated gas stream in heating is not particularly restricted as long as it is set to a level sufficient to crystallize the amorphous sulfide solid electrolyte into a crystalline sulfide solid electrolyte, and it is not necessarily determined because the temperature may vary depending on the type of the crystalline sulfide solid electrolyte to be obtained, the type of the solvent (including a complexing agent) when a solvent is used, and the scale of the pneumatic conveying dryer employed.

The temperature of the heated gas stream is, for example, preferably 150°C or higher, more preferably 160°C or higher, and even more preferably 170°C or higher, and the upper limit is preferably 250°C or lower. Here, the temperature of the heated gas stream is a supply temperature of the heated gas stream, and is, for example, a supply temperature to the pneumatic conveying dryer in a case where the above-described pneumatic conveying dryer is used. When the heating temperature is within the above range, crystallization can be performed more efficiently, and thus a crystalline sulfide solid electrolyte having higher homogeneity and high ionic conductivity can be easily obtained.

In addition, the temperature of the amorphous sulfide solid electrolyte, which is the object to be heated, is lower than the temperature of the heated gas stream because the time for heating in the heated gas stream is short and the temperature of the amorphous sulfide solid electrolyte does not usually reach the temperature of the heated gas stream. This also applies when using a pneumatic conveying dryer, or other types of dryers such as the spray dryer and the fluidized dryer; in such cases, the temperature of the object to be heated becomes lower than the internal temperature of these dryers.

The temperature of the amorphous sulfide solid electrolyte, which is the object to be heated, due to heating by dryers such as the pneumatic conveying dryer, the spray dryer, and the fluidized dryer is preferably 140°C or higher, more preferably 150°C or higher as the temperature after the heating, and the upper limit thereof is preferably 240°C or lower.

The supply amount of the heated gas stream is not particularly limited as long as the amorphous sulfide solid electrolyte can be crystallized to obtain a crystalline sulfide solid electrolyte. The supply amount of the heated gas stream is not necessarily determined because it may vary depending on the type of the crystalline sulfide solid electrolyte to be obtained, the type of the solvent (including a complexing agent) when a solvent is used, and the scale of the pneumatic conveying dryer employed. The supply amount of the heated gas stream is, for example, preferably 0.1 m³/min or more, more preferably 0.3 m³/min or more, and still more preferably 0.5 m³/min or more, and the upper limit thereof is preferably 500 m³/min or less, more preferably 475 m³/min or less, and still more preferably 450 m³/min or less. Within the above range, crystallization can be performed more efficiently, and thus a crystalline sulfide solid electrolyte having higher homogeneity and high ionic conductivity can be easily obtained.

The supply amount of the heated gas stream is not necessarily determined; however, it is also possible to be preferably 1.0 g/m³ or more, more preferably 1.5 g/m³ or more, and still more preferably 2.0 g/m³ or more, and the upper limit thereof is preferably 50.0 g/m³ or less, as the supply amount of the amorphous sulfide solid electrolyte (g/min)/the supply amount of the heated gas stream (m³/min). Within the above range, crystallization can be performed more efficiently, and thus a crystalline sulfide solid electrolyte having higher homogeneity and high ionic conductivity can be easily obtained.

Similar to the supply amount of the heated gas stream, the flow velocity of the heated gas stream is not necessarily determined; however, it is preferably 5 m/s or more, more preferably 7.5 m/s or more, and still more preferably 9 m/s or more, and the upper limit thereof is preferably 35 m/s or less, more preferably 30 m/s or less, and still more preferably 25 m/s or less. Within the above range, crystallization can be performed more efficiently, and thus a crystalline sulfide solid electrolyte having higher homogeneity and high ionic conductivity can be easily obtained.

Similar to the supply amount of the heated gas stream, the heating time in the heating in the heated gas stream is not necessarily determined; however, the upper limit is preferably 1 minute or less, more preferably 50 seconds or less, still more preferably 40 seconds or less, yet still more preferably 15 seconds or less, and particularly preferably 5 seconds or less. On the other hand, the lower limit is usually 0.05 seconds or more, preferably 0.1 seconds or more, and more preferably 0.2 seconds or more.

As described above, the heating time in the heated gas stream is extremely short. Therefore, the amorphous sulfide solid electrolyte, which is the object to be heated, is not exposed to a high-temperature condition for a long time, deterioration due to heat can be suppressed, and a crystalline sulfide solid electrolyte having high ionic conductivity can be obtained.

### (Transferring)

The production method of the present embodiment preferably includes transferring the heated powder obtained by the aforementioned heating from the heating device used in the heating in the heated gas stream to a separation apparatus through a transfer pipe. Although the heated powder, that is, the crystalline sulfide solid electrolyte, discharged from the heating device may be recovered as it is, it is preferable to recover the heated powder using a separation apparatus, which will be described later, in order to produce the crystalline sulfide solid electrolyte more efficiently.

There are no particular restrictions on the type of the transfer pipe transferring objects from the heating device to the separation apparatus, as long as it is capable of conveying the heated powder, and for example, depending on the scale, steel pipes such as stainless steel pipes, or glass pipes may be employed.

The transfer of the heated powder from the heating device to the separation apparatus may be accomplished via the transfer pipe, and there are no restrictions regarding the method employed for the transfer. Since a device capable of heating in a heated gas stream is selected as the heating device, the heated powder is usually conveyed along with the heated gas stream, that is, it is transferred as a fluid containing the powder and the heated gas stream. Consequently, the heated powder may simply be supplied to the separation apparatus through the transfer pipe as a fluid containing the powder.

Furthermore, it is preferable to heat the transfer pipe transferring objects from the heating device to the separation apparatus. By heating the transfer pipe, the crystallinity of the crystalline sulfide solid electrolyte, which is the heated powder, can be enhanced.

Regarding the method for heating the transfer pipe, there are no restrictions on the method employed, provided that the transfer pipe can be effectively heated. For example, as shown in Fig. 1, commercially available transfer pipe heaters, such as thermal insulation materials installation, jacket heaters and other heaters for heating or maintaining the temperature of piping, may be used. In addition, as the jacket heater, a steam jacket using steam as the heating medium, an electric jacket using electricity, or the like may be used.

The heating temperature of the transfer pipe may be set to a level sufficient to suppress a decrease in the temperature of the heated powder discharged from the heating device, and it is not necessarily determined because the heating temperature may vary depending on the type of the crystalline sulfide solid electrolyte to be obtained, the type of the solvent (including a complexing agent) when a solvent is used, the scale of the pneumatic conveying dryer employed, and the limit value of the supply temperature in the apparatus employed in the separation apparatus.

The heating temperature of the transfer pipe is, for example, preferably set to 150°C or higher, more preferably 160°C or higher, and even more preferably 170°C or higher, and the upper limit is preferably 250°C or lower. When the heating temperature is within the above range, crystallization can be performed more efficiently, and thus a crystalline sulfide solid electrolyte having higher homogeneity and high ionic conductivity can be easily obtained.

The supply temperature of the heated powder discharged from the heating device to the separation apparatus is not necessarily determined because the limit value of the supply temperature may vary depending on the type of apparatus employed in the separation apparatus. However, the supply temperature is preferably 150°C or lower, and the lower limit is preferably 50°C or higher, more preferably 60°C or higher, and even more preferably 70°C or higher.

### [Collecting Using Separation Apparatus]

The production method of the present embodiment preferably collects, using a separation apparatus, the powder that has been transferred by the aforementioned transferring. As previously described, the heated powder discharged from the heating device that performs heating in the heated gas stream is discharged along with the heated gas stream as a fluid containing the heated powder and the heated gas stream. This is because the use of a separation apparatus makes it possible to separate the fluid containing the heated powder and the heated gas stream into the heated powder and the heated gas stream, facilitating the selective collection of the heated powder, that is, the crystalline sulfide solid electrolyte. The material collected by the separation apparatus is the heated powder, that is, the crystalline sulfide solid electrolyte.

### (Separation Apparatus)

As the separation apparatus used for collecting the heated powder supplied via the heating device and the transfer pipe, for example, as shown in Fig. 1, a bag filter is preferably used from the viewpoint of efficiently collecting the powder. With the bag filter, the fluid containing the heated powder and the heated gas stream discharged from the heating device can be readily separated into the heated powder and the heated gas stream, and it is possible to collect and recover the heated powder.

The filter used for the bag filter can be used without particular limitation, and examples thereof include filters made of materials such as polypropylene, nylon, acrylic, polyester, cotton, wool, heat-resistant nylon, polyamide polyimide, polyphenylene sulfide (PPS), glass fiber, and polytetrafluoroethylene (PTFE), and a filter with a function such as an electrostatic filter can also be used. Among these, a filter made of heat-resistant nylon, polyamide polyimide, polyphenylene sulfide (PPS), glass fiber, or polytetrafluoroethylene (PTFE) is preferred, a filter made of heat-resistant nylon, polyphenylene sulfide (PPS), or polytetrafluoroethylene (PTFE) is more preferred, and a filter made of polytetrafluoroethylene (PTFE) is particularly preferred.

The bag filter may have a shaking-off unit, and preferred examples thereof include units by a pulsation back pressure system and a pulse jet system, and among them, units by a pulse jet system is preferred.

An induced draft fan may be provided in the line from the exhaust port of the bag filter in order to forcibly exhaust the gas exhausted from the exhaust port. By exhausting the gas by the induced draft fan, the filtration in the bag filter proceeds smoothly, and the slurry can be dried in a shorter time.

### [Mechanical Treating]

The production method of the present embodiment may include subjecting the collected material (as previously described, a crystalline sulfide solid electrolyte) obtained by the aforementioned collecting using the separation apparatus to mechanical treatment. When adjusting the morphology of the crystalline sulfide solid electrolyte obtained by the production method of the present embodiment according to its application, it is efficient to perform such adjustment through mechanical treatment.

The method of the mechanical treatment is not particularly limited as long as it includes at least one treatment selected from disintegration and granulation, and examples thereof include methods utilizing mechanical treatment devices such as stirrers and pulverizers.

The stirrer may be appropriately selected from the stirrers exemplified as apparatus that can be used in the aforementioned mixing. Preferred examples thereof include a mechanical stirring type mixer equipped with a stirring blade in a tank. Examples of the mechanical stirring type mixer include a high-speed stirring mixer and a double-arm mixer. Although either type may be employed, the high-speed stirring mixer is preferable from the viewpoint of more easily adjusting the desired morphology. More specific examples of the high-speed stirring type mixer include, in addition to the vertical shaft rotation type mixer and the horizontal shaft rotation type mixer as previously described, various other apparatus such as a high-speed swirling thin-film stirrer and a high-speed shear stirrer. Among these, a high-speed swirling thin-film stirrer (also referred to as "thin-film swirling high-speed mixer") is preferred from the viewpoint of more easily adjusting the desired morphology.

Furthermore, the pulverizer may be appropriately selected from the stirrers exemplified as apparatus that can be used in the aforementioned mixing. For example, a media type pulverizer is preferably exemplified. The media type pulverizer is roughly classified into a container driving-type pulverizer and a media agitating-type pulverizer, and either type of pulverizer may be preferably employed.

Morphology adjustment through mechanical treatment can be performed, for example, by altering the operating conditions of the stirrers and pulverizers.

Regarding morphology adjustment, if the energy imparted to the object to be subjected to mechanical treatment is reduced, the object can be disintegrated (atomized), which tends to result in an increased specific surface area. Conversely, if the imparted energy is increased, granulation (particle growth) can be achieved, which tends to result in a decreased specific surface area. For instance, when using a pulverizer, the magnitude of the imparted energy can be adjusted based on the circumferential speed of the rotating body or the size of the media particles; specifically, disintegration can be achieved by rotating the rotating body at a low circumferential speed or by decreasing the particle diameter of the media, while granulation is made possible by rotating the rotating body at a high circumferential speed or by increasing the particle diameter of the media. In addition, extending the duration of the mechanical treatment tends to promote granulation (particle growth).

As previously described, morphology adjustment through mechanical treatment can be achieved by adjusting the magnitude of the imparted energy, more specifically, by varying the circumferential speed of the rotating body and the size of the media particles. Here, since the imparted energy, the circumferential speed of the rotating body, and the size of media particles may vary depending on the quantity of the crystalline sulfide solid electrolyte to be treated and its morphological characteristics such as the average particle diameter, it is difficult to provide a definitive definition. While the term "size" mentioned above is relative, grasping the concept of "size" becomes straightforward when mechanical treatment is actually performed. Thus, no excessive trial and error is required.

When performing mechanical treatment, a solvent may be employed. That is, the collected material may be combined with a solvent to form a fluid, and the fluid may be subjected to mechanical treatment in accordance with the method described above. As the solvent, it may be appropriately selected and used from any of the exemplified solvents that can be used in obtaining the aforementioned amorphous sulfide solid electrolyte. From the viewpoint of facilitating mechanical treatment, aliphatic hydrocarbon solvents, alicyclic hydrocarbon solvents, aromatic hydrocarbon solvents, and ether-based solvents are preferred.

The amount of solvent used may be set such that the content of the collected material relative to the total amount of the collected material and the solvent is preferably 1% by mass or more, more preferably 3% by mass or more, and even more preferably 5% by mass or more, and the upper limit thereof is preferably 30% by mass or less, more preferably 20% by mass or less, and even more preferably 15% by mass or less.

### [Heating Mechanically Treated Material in Heated Gas Stream]

The production method of the present embodiment may include heating the mechanically treated material obtained by the mechanical treatment in a heated gas stream. When the collected material obtained through the aforementioned collecting is subjected to mechanical treatment, a portion thereof may become amorphized due to collisions between the collected materials themselves, between the collected material and the stirring blade of the stirrer, or between the collected material and the media of the pulverizer. In such cases, by heating the mechanically treated material in a heated gas stream, the crystallinity can be enhanced. Moreover, when the mechanical treatment is performed using a solvent, the solvent can also be removed.

The heating of the mechanically treated material in a heated gas stream can be performed in a manner similar to the heating of the aforementioned amorphous sulfide solid electrolyte in a heated gas stream. Accordingly, the heating of the mechanically treated material in a heated gas stream may be performed using heating devices such as a pneumatic conveying dryer, a spray dryer, and a fluidized dryer, other heating conditions and the like also remain the same.

For example, when heating the mechanically treated material in a heated gas stream, the temperature of the heated gas stream is preferably set to 150°C or higher, more preferably 160°C or higher, and even more preferably 170°C or higher, and the upper limit is preferably 250°C or lower. Moreover, the supply amount and the like of the heated gas stream also remain the same.

Similar to the heated powder obtained by heating the amorphous sulfide solid electrolyte in a heated gas stream, the heat-mechanically treated material obtained by heating the mechanically treated material in a heated gas stream becomes a crystalline sulfide solid electrolyte.

### (Flow of Method for Producing Crystalline Sulfide Solid Electrolyte)

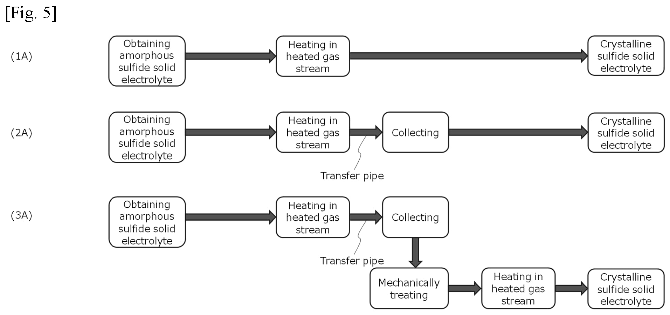

The overall flow of the production method according to the present embodiment will be described with reference to the flowchart in Fig. 5.

Fig. 5 (1A) illustrates the flow of the production method according to the present embodiment, indicating that the flow includes obtaining an amorphous sulfide solid electrolyte and heating it in a heated gas stream. Furthermore, (2A) and (3A) of Fig. 5 present examples of preferred flows of the production method according to the present embodiment. More specifically, (2A) illustrates that the flow in (1A) further includes collecting the heated powder obtained by heating in a heated gas stream using a separation apparatus through a transfer pipe, and (3A) illustrates that the flow in (2A) further includes subjecting the collected material obtained by collecting to mechanical treatment, and heating the mechanically treated material in a heated gas stream.

Obtaining an amorphous sulfide solid electrolyte in (1A) to (3A) preferably includes mixing a raw material-containing substance containing a lithium atom, a sulfur atom, a phosphorus atom, and a halogen atom as previously described, and more preferably includes mixing the raw material-containing substance using a solvent. Following the mixing of the raw material-containing substance, it is preferable to dry the fluid obtained from the mixing. By drying the fluid, the solvent can be removed, and an amorphous sulfide solid electrolyte can be obtained. When drying the fluid to remove the solvent, the drying and solvent removal can be accomplished by heating in a heated gas stream, similar to the heating of the amorphous sulfide solid electrolyte in a heated gas stream.

The production method according to the present embodiment includes heating the amorphous sulfide solid electrolyte obtained by obtaining an amorphous sulfide solid electrolyte in a heated gas stream, thereby obtaining a crystalline sulfide solid electrolyte. For the crystalline sulfide solid electrolyte obtained by heating in a heated gas stream, as indicated in (2A), the material collected by collecting may be used directly as the crystalline sulfide solid electrolyte obtained by the production method of the present embodiment; alternatively, the material collected by collecting may be subjected to mechanical treatment, and the resulting mechanically treated material may be used as the crystalline sulfide solid electrolyte; or, the mechanically treated material may be subjected to further heating in a heated gas stream, and the resulting product may be used as the crystalline sulfide solid electrolyte.

Thus, when the mechanically treated material is heated in a heated gas stream, the object to be heated in the heated gas stream may be an electrolyte precursor, an amorphous sulfide solid electrolyte, or a crystalline sulfide solid electrolyte (to which the aforementioned mechanically treated material corresponds).

### [Method for Producing Crystalline Sulfide Solid Electrolyte]

The method for producing a crystalline sulfide solid electrolyte according to another embodiment other than the present embodiment includes the following steps (i) to (iii) in sequence. The method for producing a crystalline sulfide solid electrolyte according to the other embodiment preferably further includes the following steps (iv) to (vi) in sequence.
(i) Mixing a raw material-containing substance containing a lithium atom, a phosphorus atom, a sulfur atom, and a halogen atom using a solvent
(ii) Drying a fluid obtained by the mixing to remove the solvent
(iii) Heating an amorphous sulfide solid electrolyte obtained by removing the solvent in step (ii) in a heated gas stream
(iv) Transferring a heated powder obtained by the heating in step (iii) to a separation apparatus through a transfer pipe, and collecting the powder using the separation apparatus
(v) Subjecting the collected material obtained by the collecting to mechanical treatment
(vi) Heating the mechanically treated material obtained by the mechanical treatment in a heated gas stream

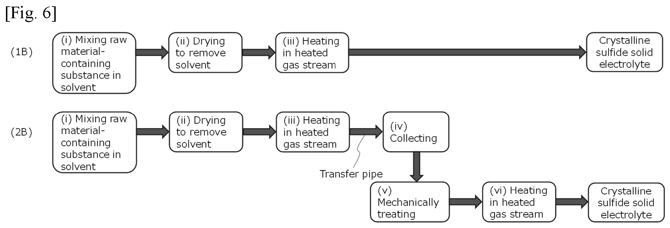

Fig. 6 (1B) illustrates the flow of the production method according to another embodiment, indicating that the flow includes mixing a raw material-containing substance in a solvent (corresponding to step (i) above, hereinafter sometimes simply referred to as "mixing"), drying to remove the solvent (corresponding to step (ii) above; hereinafter sometimes simply referred to as "removing the solvent"), and heating in a heated gas stream (corresponding to step (iii) above). By the above mixing and solvent removal, the amorphous sulfide solid electrolyte can be produced more efficiently. Accordingly, it can be said that the production method according to the other embodiment is a production method including: obtaining an amorphous sulfide solid electrolyte including (i) mixing and (ii) removing a solvent, and (iii) heating the amorphous sulfide solid electrolyte in a heated gas stream.

The raw material-containing substance and the solvent involved in the mixing step (i) are as described in the production method of the present embodiment. The methods of mixing and the like are also as described in the production method of the present embodiment. The methods of drying to remove the solvent in the solvent removal step (ii) are also as described in the production method of the present embodiment.

Moreover, the methods of heating the amorphous sulfide solid electrolyte in a heated gas stream in step (iii) of heating in a heated gas stream are also as described in the production method of the present embodiment.

Fig. 6 (2B) illustrates an example of a preferred flow of the production method according to the other embodiment. More specifically, (2B) illustrates that the flow in (1B) includes collecting the heated powder obtained by heating in a heated gas stream using a separation apparatus through a transfer pipe (corresponding to step (iv) above, hereinafter sometimes simply referred to as "collecting"), subjecting the collected material to mechanical treatment (corresponding to step (v) above, hereinafter sometimes simply referred to as "mechanical treatment") and heating the mechanically treated material in a heated gas stream (corresponding to step (vi) above, hereinafter sometimes simply referred to as "heating in a heated gas stream").

The transfer pipe and methods of collecting in the collecting step (iv), the techniques for mechanical treatment in step (v) and the resulting mechanically treated material, and the methods of heating in a heated gas stream in step (vi) are all as described in the production method of the present embodiment.

### (Amorphous Sulfide Solid Electrolyte)

The amorphous sulfide solid electrolyte used in the production method of the present embodiment contains a lithium atom, a sulfur atom, a phosphorus atom, and a halogen atom, and representative examples thereof preferably include solid electrolytes composed of lithium sulfide, phosphorus sulfide, and a lithium halide, for example, Li₂S-P₂S₅-LiI, Li₂S-P₂S₅-LiCl, Li₂S-P₂S₅-LiBr, and Li₂S-P₂S₅-LiI-LiBr; and solid electrolytes containing other atoms such as an oxygen atom and a silicon atom, for example, Li₂S-P₂S₅-Li₂O-LiI and Li₂S-SiS₂-P₂S₅-LiI. From the viewpoint of obtaining higher ionic conductivity, solid electrolytes composed of lithium sulfide, phosphorus sulfide, and a lithium halide, such as Li₂S-P₂S₅-LiI, Li₂S-P₂S₅-LiCl, Li₂S-P₂S₅-LiBr, and Li₂S-P₂S₅-LiI-LiBr, are preferred.

The types of atoms constituting the amorphous sulfide solid electrolyte can be confirmed by, for example, an ICP emission spectrophotometer.

When the amorphous sulfide solid electrolyte obtained by the production method of the present embodiment has at least Li₂S-P₂S₅, the molar ratio of Li₂S and P₂S₅ is preferably 65 to 85 : 15 to 35, more preferably 70 to 80 : 20 to 30, and still more preferably 72 to 78 : 22 to 28, from the viewpoint of obtaining higher ionic conductivity.

When the amorphous sulfide solid electrolyte obtained by the production method of the present embodiment is, for example, Li₂S-P₂S₅-LiI-LiBr, the total content of lithium sulfide and diphosphorus pentasulfide is preferably 60 to 95% by mole, more preferably 65 to 90% by mole, and still more preferably 70 to 85% by mole. Further, the ratio of lithium bromide relative to the total of lithium bromide and lithium iodide is preferably 1 to 99% by mole, more preferably 20 to 90% by mole, even more preferably 40 to 80% by mole, and particularly preferably 50 to 70% by mole.

In the amorphous sulfide solid electrolyte obtained by the production method of the present embodiment, the blending ratio (molar ratio) of lithium atoms, sulfur atoms, phosphorus atoms, and halogen atoms is 1.0 to 1.8 : 1.0 to 2.0 : 0.1 to 0.8 : 0.01 to 0.6 is preferable, more preferably 1.1 to 1.7 : 1.2 to 1.8 : 0.2 to 0.6 : 0.05 to 0.5, and still more preferably 1.2 to 1.6 : 1.3 to 1.7 : 0.25 to 0.5 : 0.08 to 0.4. Further, when bromine and iodine are used together as halogen atoms, the blending ratio (molar ratio) of lithium atoms, sulfur atoms, phosphorus atoms, bromine, and iodine is preferably 1.0 to 1.8 : 1.0 to 2. 0 : 0.1 to 0.8 : 0.01 to 0.3 : 0.01 to 0.3, more preferably 1.1 to 1.7 : 1.2 to 1.8 : 0.2 to 0. 6 : 0.02 to 0.25 : 0.02 to 0.25, even more preferably 1.2 to 1.6 : 1.3 to 1.7 : 0.25 to 0.5 : 0.03 to 0.2 : 0.03 to 0.2, and further more preferably 1.35 to 1.45 : 1.4 to 1.7 : 0.3 to 0.45 : 0.04 to 0.18 : 0.04 to 0.18. By setting the blending ratio (molar ratio) of lithium atoms, sulfur atoms, phosphorus atoms, and halogen atoms within the above range, it becomes easy to obtain a solid electrolyte having a thio-LISICON Region II type crystal structure or the like to be described later and having a higher ionic conductivity.

The shape of the amorphous sulfide solid electrolyte is not particularly limited, and examples thereof include a particle shape.

The average particle diameter (D₅₀) of the particle shaped amorphous sulfide solid electrolyte is, for example, 0.01 µm or more, further 0.03 µm or more, 0.05 µm or more, and 0.1 µm or more, and the upper limit is 5 µm or less, further 3.0 µm or less, 1.5 µm or less, 1.0 µm or less, and 0.5 µm or less.

As the amorphous sulfide solid electrolyte used in the production method of the other embodiment, the same amorphous sulfide solid electrolyte as that used in the production method of the present embodiment described above is exemplified.

### (Crystalline Sulfide Solid Electrolyte)

The crystalline sulfide solid electrolyte obtained by the production method of the present embodiment may be a so-called glass ceramic obtained by heating an amorphous sulfide solid electrolyte to a crystallization temperature or higher, and examples of a crystal structure thereof include a Li₃PS₄ crystal structure, a Li₄P₂S₆ crystal structure, a Li₇PS₆ crystal structure, a Li₇P₃S₁₁ crystal structure, and a crystal structure having peaks in the vicinity of 2θ = 20.2° and in the vicinity of 23.6° (for example, JP 2013-16423 A).

Examples also include a Li₄₋ₓGe₁₋ₓPₓS₄ system thio-LISICON Region II type crystal structure (see Kanno et al., Journal of The Electrochemical Society, 148 (7) A742-746 (2001)), and a crystal structure similar to the Li₄₋ₓGe₁₋ₓPₓS₄ system thio-LISICON Region II type (see Solid State Ionics, 177 (2006), 2721-2725). The crystal structure of the crystalline sulfide solid electrolyte obtained by the production method of the present embodiment is preferably the thio-LISICON Region II type crystal structure, among above, from the viewpoint of obtaining higher ionic conductivity. Herein, the term "thio-LISICON Region II type crystal structure" refers to either a Li₄₋ₓGe₁₋ₓPₓS₄ system thio-LISICON Region II type crystal structure or a crystal structure similar to the Li₄₋ₓGe₁₋ₓPₓS₄ system thio-LISICON Region II type crystal structure.

Herein, the notation of the crystal structure of the "Li₄₋ₓGe₁₋ₓPₓS₄ system thio-LISICON Region II type" means that the crystal structure is found as a crystal structure composed of Li, Ge, P, and S atoms in the aforementioned literature. Since the sulfide solid electrolyte obtained by the production method of the present embodiment contains a lithium atom, a phosphorus atom, a sulfur atom, and a halogen atom, the sulfide solid electrolyte may not be represented by the composition formula of "Li₄₋ₓGe₁₋ₓPₓS₄" in the "Li₄₋ₓGe₁₋ₓPₓS₄ system thio-LISICON Region II type". However, in a case where the sulfide solid electrolyte obtained by the production method of the present embodiment has the same diffraction peak as the aforementioned "thio-LISICON Region II type crystal structure" (including the aforementioned "similar crystal structure"), it can be said that the sulfide solid electrolyte obtained by the production method of the present embodiment has a thio-LISICON Region II type crystal structure formed of a lithium atom, a phosphorus atom, a sulfur atom, and a halogen atom.

The crystalline sulfide solid electrolyte obtained by the production method of the present embodiment may contain the thio-LISICON Region II type crystal structure, or may contain the thio-LISICON Region II type crystal structure as a main crystal; however, from the viewpoint of obtaining higher ionic conductivity, it is preferable that the crystalline sulfide solid electrolyte contains the thio-LISICON Region II type crystal structure as a main crystal. In the description herein, "containing as a main crystal" means that the proportion of the target crystal structure in the crystal structure is 80% or more, and the proportion is preferably 90% or more, and more preferably 95% or more. In addition, from the viewpoint of obtaining higher ionic conductivity, it is preferable that the crystalline sulfide solid electrolyte obtained by the production method of the present embodiment does not contain crystalline Li₃PS₄ (β-Li₃PS₄).

In the X-ray diffractometry using CuKα line, the diffracted peak of the Li₃PS₄ crystal structure appears, for example, in the vicinity of 2θ = 17.5°, 18.3°, 26.1°, 27.3°, and 30.0°, the diffracted peak of the Li₄P₂S₆ crystal structure appears, for example, in the vicinity of 2θ = 16.9°, 27.1°, and 32.5°, the diffraction peak of the Li₇PS₆ crystal structure appears, for example, in the vicinity of 2θ = 15.3°, 25.2°, 29.6°, and 31.0°, the diffraction peak of the Li₇P₃S₁₁ crystal structure appears, for example, in the vicinity of 2θ = 17.8°, 18.5°, 19.7°, 21.8°, 23.7°, 25.9°, 29.6°, and 30.0°, the diffraction peak of the Li₄₋ₓGe₁₋ₓPₓS₄ system thio-LISICON Region II type crystal structure appears, for example, in the vicinity of 2θ = 20.1°, 23.9°, and 29.5°, and the diffraction peak of the crystal structure similar to the Li₄₋ₓGe₁₋ₓPₓS₄ system thio-LISICON Region II type appears, for example, in the vicinity of 2θ = 20.2° and 23.6°. These peak positions may vary within a range of ±0.5°.

In addition, the composition ratio of the atoms contained in the crystalline sulfide solid electrolyte is a composition ratio according to a compositional formula corresponding to each of the above-mentioned various crystal structures, and is preferably within the range of the composition ratio of each atom contained in the above-mentioned amorphous sulfide solid electrolyte. When the composition ratio of each atom is within the range of the composition ratio of each atom, a thio-LISICON Region II-type crystal structure is easily formed among the above-mentioned crystal structures.

### (Content of Complexing agent)

In the production method of the present embodiment, when an amorphous sulfide solid electrolyte produced using a complexing agent is used, the content of the complexing agent contained in the crystalline sulfide solid electrolyte obtained by the production method of the present embodiment is preferably 0% by mass, that is, it is preferably that no complexing agent is contained at all; however, from the viewpoint of obtaining a sulfide solid electrolyte having high ionic conductivity more efficiently, it is usually 10% by mass or less, further 8% by mass or less, 5% by mass or less, 3% by mass or less, and 1% by mass or less, and the lower limit is about 0.01% by mass or more.

In addition, similar to the complexing agent, if a solvent is used, the solvent may also remain. In this case, the content of the solvent is also the same as the numerical range of the content of the complexing agent.

The shape of the crystalline sulfide solid electrolyte is not particularly limited, and examples thereof include a particle shape.

The average particle diameter (D₅₀) of the particle shaped crystalline sulfide solid electrolyte is, for example, 0.01 µm or more, further 0.03 µm or more, 0.05 µm or more, and 0.1 µm or more, and the upper limit is 5 µm or less, further 3.0 µm or less, 1.5 µm or less, 1.0 µm or less, and 0.5 µm or less. The crystalline sulfide solid electrolyte obtained by the production method of the present embodiment is crystallized by heating it in a heated gas stream. Therefore, the generation of secondary particles due to aggregation of primary particles is suppressed, and the average particle diameter becomes small as the above range. By heating the amorphous sulfide solid electrolyte in a heated gas stream, an additional effect of reducing the average particle diameter is achieved.

Therefore, in the production method of the present embodiment, there is no need to perform pulverization (atomization) treatment among the mechanical treatment. It should be noted, however, that mechanical treatment may be performed as necessary, as previously explained.

Further, the specific surface area of the sulfide solid electrolyte obtained by the production method of the present embodiment is usually 10 m²/g or more, further 15 m²/g or more, 20 m²/g or more, or 25 m²/g or more. The upper limit is not particularly limited, and for example, about 50 m²/g or less. In the description herein, the specific surface area is a value measured by the BET method (gas adsorption method), and nitrogen may be used as the gas (nitrogen method), krypton also may be used as the gas (krypton method), it is appropriately selected and measured depending on the size of the specific surface area.

As the crystalline sulfide solid electrolyte obtained by the production method of the other embodiment, the same crystalline sulfide solid electrolyte obtained by the production of the present embodiment described above is exemplified.

### (Application)

The crystalline sulfide solid electrolyte obtained by the production method of the present embodiment has high ionic conductivity and excellent battery performance, and thus is suitably used for a battery. A battery utilizing the crystalline sulfide solid electrolyte obtained through the production method of the present embodiment is referred to as a lithium-ion battery; furthermore, as described later, a battery in which the crystalline sulfide solid electrolyte is employed in the electrolyte layer is referred to as an all-solid-state battery.

The sulfide solid electrolyte of the present embodiment may be used for a positive electrode layer, a negative electrode layer, or an electrolyte layer. Each layer can be produced by a known method.

In addition, in the battery, a current collector is preferably used in addition to the positive electrode layer, the electrolyte layer, and the negative electrode layer, and a known current collector can be used. For example, a layer obtained by coating a material that reacts with the solid electrolyte, such as Au, Pt, Al, Ti, and Cu, with Au can be used.

### [Apparatus for Producing Crystalline Sulfide Solid Electrolyte]

The apparatus for producing a crystalline sulfide solid electrolyte according to the present embodiment is an apparatus including
a device for producing an amorphous sulfide solid electrolyte containing a lithium atom, a phosphorus atom, a sulfur atom, and a halogen atom; and
a heating device for heating the amorphous sulfide solid electrolyte in a heated gas stream.

As the device for producing the amorphous sulfide solid electrolyte, any device capable of producing the amorphous sulfide solid electrolyte may be adopted without particular restriction. For example, mixing devices, such as mixers, stirrers, and pulverizers, described as devices that can be used for mixing raw material-containing substances, thermal dryers capable of drying by heating to a drying temperature and/or by reducing pressure described as devices that can be used for drying a fluid obtained from the mixing devices to remove a solvent, as well as drying devices, such as pneumatic conveying dryers, spray dryers, and fluidized dryers capable of drying by heating with a heated gas stream can be preferably employed. Among these, pneumatic conveying dryers are preferred.

When employing devices capable of drying by heating with a heated gas stream as the device used in removing a solvent, similar to the case of the heating device for amorphous sulfide solid electrolytes described later, it is preferable to use a transfer pipe and a separation apparatus.

Furthermore, as the drying device, it is also possible to employ devices such as filtration units utilizing glass filters, solid-liquid separation units based on decantation, and solid-liquid separation units utilizing centrifuges.

In addition, as the heating device for heating in a heated gas stream, which is included in the production apparatus of the present embodiment, a pneumatic conveying dryer, a spray dryer, or a fluidized dryer is preferably employed, as described in the production method of the present embodiment, and among these, a pneumatic conveying dryer is preferred.

The production apparatus of the present embodiment preferably further includes
a separation apparatus collecting a heated powder obtained from the heating device;
a mechanical treatment device mechanically treating a collected material obtained from the separation apparatus;
a heating device heating the mechanically treated material obtained by the mechanical treatment; and
a transfer pipe transferring the heated powder from the heating device to the separation apparatus.

As the separation apparatus, any apparatus capable of collecting the heated powder obtained from the aforementioned heating device may be adopted without particular restriction; however, as described in the production method of the present embodiment, it is preferable to employ a bag filter. The configuration of the heating device, the transfer pipe, and the separation apparatus (bag filter) is, for example, as illustrated in Fig. 1.

As the mechanical treatment device, any device capable of performing at least one treatment selected from disintegration and granulation may be adopted without particular restriction; however, as described in the production method of the present embodiment, it is preferable to employ a mechanical treatment device such as a stirrer and a pulverizer.

As the heating device for heating the mechanically treated material, as described in the production method of the present embodiment, it is preferable to employ a device capable of heating in a heated gas stream, for example, a heating device such as a pneumatic conveying dryer, a spray dryer, and a fluidized dryer. Among these, it is preferable to employ a pneumatic conveying dryer. Furthermore, when employing a device capable of heating in a heated gas stream as the heating device for the mechanically treated material, similar to the heating device used for heating the aforementioned amorphous sulfide solid electrolyte, a transfer pipe for conveying the material to a separation apparatus, and a separation apparatus such as a bag filter may be employed.

Moreover, as the transfer pipe, as described in the production method of the present embodiment, depending on the scale, steel pipes such as stainless steel pipes, or glass pipes may be employed. In addition, it is preferable to heat the transfer pipe using commercially available products, such as thermal insulation materials installation, jacket heaters and other heaters for heating or maintaining the temperature of piping.

### Examples

Next, the present invention will be specifically described with reference to Examples, but the present invention is not limited to these Examples.

### (Measurement of Powder XRD Diffraction)

Powder X-ray diffraction (XRD) measurement was performed as follows.

Each of the powders of the sulfide solid electrolytes obtained in Examples and Comparative Examples was filled in a groove having a diameter of 20 mm and a depth of 0.2 mm, and was leveled with glass to obtain a sample. The sample was sealed with a Kapton film for XRD and measured under the following conditions without being exposed to air.
Measuring device: D2 PHASER, manufactured by Bruker Co., Ltd.
Tube voltage: 30 kV
Tube current: 10 mA
X-ray wavelength: Cu-Kα line (1.5418 Å)
Optical system: concentration method
Slit configuration: Using solar slit 4°, divergence slit 1mm, Kβ filter (Ni plate)
Detector: semiconductor detector
Measurement range: 2θ = 10 to 60 deg
Step width, Scan speed: 0.05 deg, 0.05 deg/second

### (Measurement of Ionic Conductivity)

In the present examples, the ionic conductivity was measured as follows.

Circular pellets having diameters 10 mm (cross-sectional area S: 0.785 cm²) and heights (L) of 0.1 to 0.3 cm were molded from the crystalline solid electrolytes obtained in Example and Comparative example, to obtain samples. Electrode terminals were taken from the top and bottom of the sample, and measured by an AC impedance method at 25°C (frequency range: 5 MHz to 0.5 Hz, amplitude: 10 mV), and a Cole-Cole plot was obtained. The real part Z' (Ω) at the point where -Z" (Ω) becomes minimum in the vicinity of the right end of the arc observed in the high frequency side region was defined as the bulk resistance R (Ω) of the electrolyte, and the ionic conductivity σ (S/cm) was calculated according to the following equations. $R = ρ \left(L/S\right)$ $σ = 1 / ρ$

### (Measurement of Content of Complexing Agent Contained in Sulfide Solid Electrolyte)

The content of the complexing agent contained in the sulfide solid electrolyte was measured using a gas chromatography device (GC). The outline of the measurement is that a powder of a sulfide solid electrolyte decomposed with a mixture of water and pentanol (content of pentanol in the mixture: 90% by volume) is measured by GC, and the complexing agent is quantitated using an absolute calibration curve.

First, 0.1 g of the sample is accurately weighed and placed in a vial. 10 ml of a mixture of water and pentanol is placed into a vial and dissolved completely to decompose the sample completely. Approximately 1.5 ml of the dissolved sample is placed into a GC vial, covered with a lid, and stopped with a crimper. This is set on the GC autosampler to be measured. For the calibration curve, 0.5 g of the complexing agent to be used is weighed out, and the volume is adjusted to 50 mL (equivalent to 10,000 µg/mL) by a mixture of water and pentanol. This is diluted and adjusted to 2500, 1000, 250, 25, 2.5 µg/ml (standard solution) and measured by GC, and a calibration curve is prepared using the least squares method from the peak area and the concentration of the standard solution. The GC peak area value of the sample solution was applied to the calibration curve, and the concentration in the sample solution was calculated according to the following formula. 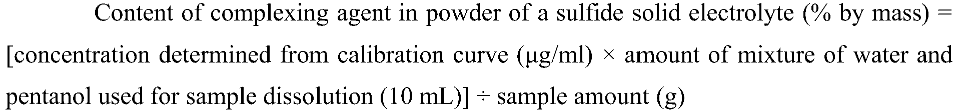 Content of complexing agent in powder of a sulfide solid electrolyte (% by mass) = [concentration determined from calibration curve (µg/ml) × amount of mixture of water and pentanol used for sample dissolution (10 mL)] ÷ sample amount (g)

### (Preparation Example: Preparation of Amorphous Sulfide Solid Electrolyte)

The amorphous sulfide solid electrolytes used in Examples and Comparative Examples were prepared by the following method. Here, the amounts of the solid electrolyte raw material and the complexing agent used were set to the amounts required in each of Examples and Comparative Examples while the ratio of the amounts used described in the following method was the same.

13.19 g of lithium sulfide, 21.26 g of diphosphorus pentasulfide, 4.15 g of lithium bromide, and 6.40 g of lithium iodide (total amount of solid electrolyte raw materials: 45 g) were introduced into a 1-liter reaction tank equipped with stirring blades under a nitrogen atmosphere. To this, 100 mL of tetramethylethylenediamine (TMEDA) as a complexing agent and 800 mL of cyclohexane as a solvent were added, and a stirring blade was operated to perform mixing by stirring at 30°C for 72 hours. 456 g of zirconia balls (diameter: 0.5 mmφ) (bead filling rate relative to the grinding chamber: 80%) was charged into a bead mill which is capable of circulating operation circulation ("Labo Star Mini LMZ015 (product name)", manufactured by Ashizawa Finetech Ltd. Co., Ltd.), pulverized for 60 minutes while circulating between the reaction tank and the grinding chamber under the conditions of pump flow rate: 550 mL/min, circumferential speed: 8 m/s, and mill jacket temperature: 20°C, to obtain a slurry of the electrolyte precursor (complex). Next, the obtained slurry was immediately dried under vacuum at room temperature (23°C) to obtain a powder of the electrolyte precursor (complex). The content of the complexing agent contained in the obtained powder of the electrolyte precursor (complex) was 55% by mass.

The powder of the electrolyte precursor obtained in the above-described Preparation Example was heated in the heated gas stream using an apparatus having a configuration shown in the schematic diagram of the apparatus used for heating in the heated gas stream of Fig. 1. The apparatus shown in Fig. 1 is an apparatus mainly including a pneumatic conveying dryer (which is a cylindrical container type pneumatic conveying dryer) and a bag filter, and includes a blower and a heater for supplying the heated gas stream, and a mixer for pneumatically transporting the object to be heated by gas. In addition, although not shown, a feeder capable of supplying the object to be heated in a state of powder or slurry may be provided (not shown).

In the apparatus shown in Fig. 1, the electrolyte precursor (object to be heated) is pneumatically transported to the lower portion of the pneumatic conveying dryer in the form of gas, and a heated gas stream obtained by heating the gas with a heater is supplied from the bottom portion of the pneumatic conveying dryer. The object to be heated that has been heated in the heated gas stream in the pneumatic conveying dryer becomes a powder (powder of amorphous sulfide solid electrolyte) obtained by removing the complexing agent from the electrolyte precursor, and the heated gas stream containing the powder is supplied to a bag filter downstream. The powder (powder of amorphous sulfide solid electrolyte) obtained by removing the complexing agent from the electrolyte precursor is collected by the bag filter, and the heated gas stream after the powder is collected is exhausted as it is.

Using the aforementioned pneumatic conveying dryer, nitrogen heated to 135°C was used as a heated gas stream, and supply to the pneumatic conveying dryer was started at 3 m³/min. Next, supplying was performed to the pneumatic conveying dryer using a table feeder at a supply rate of 91.5 g/min. The object to be heated (powder of the electrolyte precursor) was heated in a heated gas stream using a pneumatic conveying dryer, and the heated gas stream discharged from the pneumatic conveying dryer was supplied to a bag filter of a separation apparatus via a transfer pipe to collect a powder obtained by removing the complexing agent from the electrolyte precursor, which was contained in the heated gas stream. This was continued for 20 minutes (that is, the operation time was 20 minutes).

When the collected powder was subjected to powder XRD diffraction measurements, it exhibited a halo pattern, thereby confirming that it was an amorphous sulfide solid electrolyte.

### (Example 1)

The amorphous sulfide solid electrolyte obtained in the above Preparation Example was supplied to the apparatus shown in Fig. 1, which is an apparatus other than the one used in the Preparation Example, and was heated in a heated gas stream in the pneumatic conveying dryer. The heated gas stream discharged from the pneumatic conveying dryer was supplied to the bag filter of the separation apparatus through the transfer pipe to collect the heated powder contained in the heated gas stream. Here, nitrogen heated to 220°C was used as the heated gas stream, and supply to the pneumatic conveying dryer was started at 2.6 m³/min. Next, the amorphous sulfide solid electrolyte powder was supplied to the pneumatic conveying dryer using a table feeder at a supply rate of 36.2 g/min and was continued for 45 minutes (i.e., the operation time was 45 minutes). In addition, the time for the amorphous sulfide solid electrolyte passing through in the pneumatic conveying dryer was 0.25 seconds.

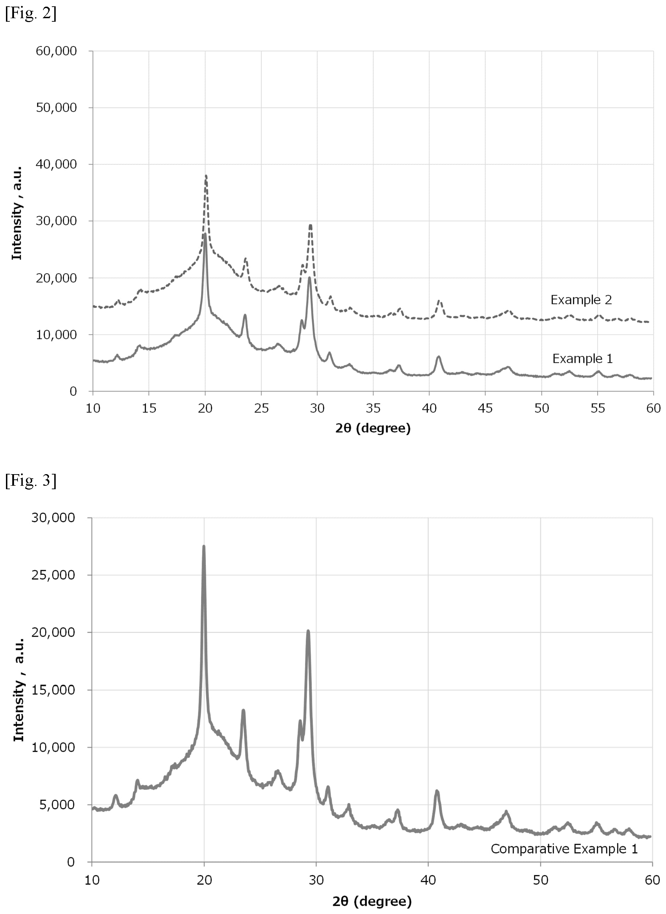

The obtained heated powder was subjected to powder XRD diffraction measurement. The X-ray diffraction spectra are shown in Fig. 2. As shown in Fig. 2, crystallization peaks were mainly detected at 2θ = 20.2° and 23.6° in the X-ray diffraction spectrum, and it was confirmed that the solid electrolyte was a crystalline sulfide solid electrolyte having a thio-LISICON Region II type crystal structure. The ionic conductivity was measured and found to be 3.94 mS/cm, and the average particle diameter was 3.1 µm. The contents of the complexing agents in the amorphous sulfide solid electrolyte and the crystalline sulfide solid electrolyte were 13.2% by mass and 1.34% by mass, respectively. In addition, the temperature of the heated gas stream at the outlet of the pneumatic conveying dryer, the flow velocity in the thermal dryer, and the temperature of the object to be heated at the inlet of the bag filter are as shown in Table 1.

### (Example 2)

35.0 g of the crystalline sulfide solid electrolyte, which is the collected material obtained in Example 1, and 547 g of toluene were charged into a 1-liter reaction tank equipped with stirring blades under a nitrogen atmosphere. After rotating the stirrer, mechanical treatment was performed using a bead mill capable of circulating operation ("Starmill LMZ015 (trade name)", manufactured by Ashizawa Finetech Ltd.) for one hour (bead material: zirconia, bead diameter: 0.3 mmφ, amount of beads used: 456 g, pump flow rate: 650 mL/min, circumferential speed: 12 m/s, mill jacket temperature: 10°C).

The resulting slurry was supplied to the apparatus shown in Fig. 1, which is an apparatus other than the apparatus used in the aforementioned Preparation Example and Example 1, and was heated in a heated gas stream in the pneumatic conveying dryer, thereby heating the mechanically treated material contained in the slurry. The heated gas stream (containing the mechanically treated material) discharged from the pneumatic conveying dryer was supplied to the bag filter of the separation apparatus through the transfer pipe to collect the powder of the heated mechanically treated material contained in the heated gas stream. This was continued for 60 minutes (that is, the operation time was 60 minutes). Here, nitrogen heated to 210°C was used as a heated gas stream, and supply to the pneumatic conveying dryer was started at 2.6 m³/min. Next, supplying was performed to the pneumatic conveying dryer using a table feeder at a supply rate of 45.0 g/min. In addition, the time for the heated mechanically treated material passing through in the pneumatic conveying dryer was 0.25 seconds.

The obtained heated mechanically treated powder was subjected to powder XRD diffraction measurement. The X-ray diffraction spectra are shown in Fig. 2. As shown in Fig. 2, crystallization peaks were mainly detected at 2θ = 20.2° and 23.6° in the X-ray diffraction spectrum, and it was confirmed that the solid electrolyte was a crystalline sulfide solid electrolyte having a thio-LISICON Region II type crystal structure. The ionic conductivity was measured and found to be 3.93 mS/cm, and the average particle diameter was 1.5 µm. The content of the complexing agent of the mechanically treated material (crystalline sulfide solid electrolyte) was 1.2% by mass. In addition, the temperature of the heated gas stream at the outlet of the pneumatic conveying dryer, the flow velocity in the thermal dryer, and the temperature of the object to be heated at the inlet of the bag filter are as shown in Table 1.

### (Comparative Example 1)

The procedure was carried out in the same manner as in Example 1, except that in Example 1, the heating of the amorphous sulfide solid electrolyte was performed in a Schlenk tube at 110°C for 2 hours and further at 160°C for 2 hours. The obtained powder was subjected to powder XRD diffraction measurement. The X-ray diffraction spectra are shown in Fig. 3. As shown in Fig. 3, crystallization peaks were mainly detected at 2θ = 20.2° and 23.6° in the X-ray diffraction spectrum, and it was confirmed that the solid electrolyte was a crystalline sulfide solid electrolyte having a thio-LISICON Region II type crystal structure. The ionic conductivity was measured and found to be 4.0 mS/cm, and the content of the complexing agent was 1.2% by mass.

### (Comparative Example 2)

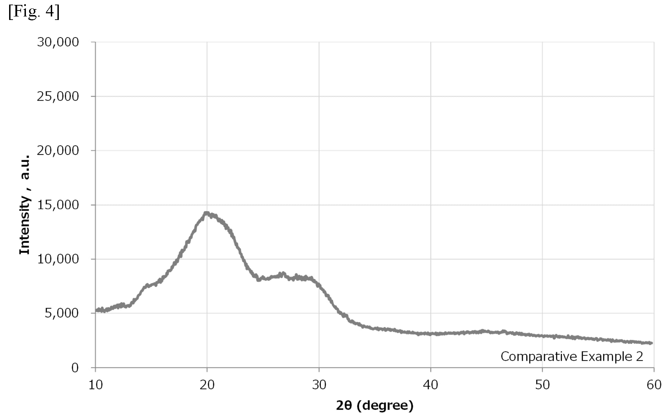

The procedure was carried out in the same manner as in Comparative Example 1, except that in Comparative Example 1, the heating in a Schlenk tube at 160°C was performed for 1 minute. The obtained powder was subjected to powder XRD diffraction measurement. The X-ray diffraction spectra are shown in Fig. 4. As shown in Fig. 4, no crystallization peaks were detected in the X-ray diffraction spectrum; instead, a halo pattern was observed, indicating that an amorphous sulfide solid electrolyte was obtained. The content of the complexing agent was 9.2% by mass.

### [Table 1]

**Table 1**

| | | Examples | |
|---|---|---|---|
| | | 1 | 2 |
| Electrolyte precursor supply rate: W₁ | g/min | 36.2 | 45.0 |
| Heated gas stream | | | |
| Supply amount: W₂ | m³/min | 2.6 | 2.6 |
| Pneumatic conveying dryer supply temperature | °C | 220 | 210 |
| Pneumatic conveying dryer outlet temperature | °C | 206 | 197 |
| Flow velocity in pneumatic conveying dryer | m/s | 19.7 | 19.7 |
| Heating time | sec | 0.25 | 0.25 |
| W₁/W₂ | g/m³ | 13.9 | 17.3 |
| Bag filter inlet temperature | °C | 189 | 178 |
| Operation time | min | 45 | 60 |
| Electrolyte precursor total supply amount | g | 1630 | 2700 |
| Ionic conductivity | mS/cm | 3.94 | 3.93 |

Based on the results of the Examples, it was confirmed that a crystalline sulfide solid electrolyte can be obtained in a short period of time, i.e., 0.25 seconds, by heating an amorphous sulfide solid electrolyte in a heated gas stream. In contrast, based on the results of Comparative Examples 1 and 2, it was confirmed that while a crystalline sulfide solid electrolyte can be obtained through a total of four hours of heating, it cannot be obtained through just one minute of heating. Thus, it was found that by heating in a heated gas stream in the Examples, a crystalline sulfide solid electrolyte can be obtained in an extremely short period of time.

It was confirmed that the ionic conductivity of the crystalline sulfide solid electrolytes obtained in the Examples are higher than the ionic conductivity of the crystalline sulfide solid electrolyte obtained in Comparative Example 1. It is considered that the crystalline sulfide solid electrolyte obtained in Comparative Example 1 exhibited lower ionic conductivity because deterioration, such as oxidation, caused by excessive thermal history occurred due to long heating duration. In addition, in Comparative Example 2, where the heating duration was shortened, no diffraction peaks indicative of the formation of a crystalline structure were observed, and a crystalline sulfide solid electrolyte was not obtained.

Furthermore, based on the diffraction peak results from Example 2 (Fig. 2), it was confirmed that the crystalline sulfide solid electrolyte obtained in Example 2 had the same diffraction peaks as the crystalline sulfide solid electrolyte obtained in Example 1. In other words, although the mechanically treated collected material obtained in Example 1 had a reduced average particle diameter and in some cases underwent partial amorphization, it was confirmed that the crystalline sulfide solid electrolyte obtained in Example 2 by heating again in a heated gas stream is equivalent to the crystalline sulfide solid electrolyte obtained in Example 1.

### Industrial Applicability

According to the method for producing a sulfide solid electrolyte according to the present embodiment, a sulfide solid electrolyte having high ionic conductivity can be efficiently produced. Furthermore, the method can be readily adapted for the mass production of sulfide solid electrolytes. Therefore, the sulfide solid electrolytes of the present embodiment obtained by the production method of the present embodiment are suitably used for batteries, in particular, batteries used for information-related devices such as personal computers, video cameras, and mobile phones, and communication devices, in particular, all-solid-state batteries.

## Claims

1. A method for producing a crystalline sulfide solid electrolyte, comprising:
obtaining an amorphous sulfide solid electrolyte containing a lithium atom, a phosphorus atom, a sulfur atom, and a halogen atom; and
heating the amorphous sulfide solid electrolyte in a heated gas stream.

2. The method for producing a crystalline sulfide solid electrolyte according to claim 1, wherein a temperature of the heated gas stream is 150°C or higher and 250°C or lower.

3. The method for producing a crystalline sulfide solid electrolyte according to claim 1 or 2, comprising
transferring a heated powder obtained by the heating from a heating device used in the heating in the heated gas stream to a separation apparatus through a transfer pipe; and
collecting the transferred heated powder using the separation apparatus;
wherein the transfer pipe is heated.

4. The method for producing a crystalline sulfide solid electrolyte according to claim 3, wherein a temperature of the transfer pipe is 150°C or higher and 250°C or lower.

5. The method for producing a crystalline sulfide solid electrolyte according to claim 3 or 4, comprising
subjecting the collected material obtained by the collecting to mechanical treatment; and
heating the mechanically treated material obtained by the mechanical treatment in a heated gas stream.

6. The method for producing a crystalline sulfide solid electrolyte according to claim 5, wherein the temperature of the heated gas stream is 150°C or higher and 250°C or lower.

7. The method for producing a crystalline sulfide solid electrolyte according to any one of claims 1 to 6, wherein the heating in the heated gas stream is performed using a pneumatic conveying dryer.

8. The method for producing a crystalline sulfide solid electrolyte according to any one of claims 1 to 7, wherein the crystalline sulfide solid electrolyte has a thio-LISICON Region II type crystal structure.

9. A method for producing a crystalline sulfide solid electrolyte, comprising the following steps (i) to (iii) in sequence.
(i) Mixing a raw material-containing substance containing a lithium atom, a phosphorus atom, a sulfur atom, and a halogen atom using a solvent
(ii) Drying a fluid obtained by the mixing to remove the solvent
(iii) Heating an amorphous sulfide solid electrolyte obtained by removing the solvent in step (ii) in a heated gas stream

10. The method for producing a crystalline sulfide solid electrolyte according to claim 9, further comprising the following steps (iv) to (vi) in sequence.
(iv) Transferring a heated powder obtained by the heating in step (iii) to a separation apparatus through a transfer pipe, and collecting the powder using the separation apparatus
(v) Subjecting the collected material obtained by the collecting to mechanical treatment
(vi) Heating the mechanically treated material obtained by the mechanical treatment in a heated gas stream

11. An apparatus for producing a crystalline sulfide solid electrolyte, comprising:
a device for producing an amorphous sulfide solid electrolyte containing a lithium atom, a phosphorus atom, a sulfur atom, and a halogen atom; and
a heating device for heating the amorphous sulfide solid electrolyte in a heated gas stream.

12. The apparatus for producing a crystalline sulfide solid electrolyte according to claim 11, wherein
the device for producing the amorphous sulfide solid electrolyte includes
a mixing device mixing a raw material-containing substance containing a lithium atom, a phosphorus atom, a sulfur atom, and a halogen atom using a solvent; and
a drying device drying a fluid obtained from the mixing device to remove the solvent.

13. The apparatus for producing a crystalline sulfide solid electrolyte according to claim 11 or 12, further comprising
a separation apparatus collecting a heated powder obtained from the heating device;
a mechanical treatment device mechanically treating a collected material obtained from the separation apparatus;
a heating device heating the mechanically treated material obtained by the mechanical treatment; and
a transfer pipe transferring the heated powder from the heating device to the separation apparatus.
